# EUROPEAN PATENT SPECIFICATION

(11) **EP 0 579 247 B1**
(45) Date of publication and mention of the grant of the patent: **14.06.2000**
(21) Application number: 93111449.0
(22) Date of filing: 16.07.1993
(51) Int. Cl.: G02F 1/137, G09G 3/36

(54) **Liquid crystal electrooptical device**
Elektrooptische Flüssigkristall-Vorrichtung
Dispositif électro-optique à cristal liquide

(30) Priority: 16.07.1992 JP 18943692; 23.07.1992 JP 19703492; 17.08.1992 JP 21793192; 01.10.1992 JP 26383692; 18.12.1992 JP 33905192; 14.07.1993 JP 19560193
(43) Date of publication of application: 19.01.1994
(73) Proprietor: SEIKO EPSON CORPORATION, Shinjuku-ku, Tokyo 163-0811 (JP)
(72) Inventor: Tanaka, Takaaki, Suwa-shi, Nagano-ken 392 (JP); Sato, Yuzuru, Suwa-shi, Nagano-ken 392 (JP)
(74) Representative: Hoffmann, Eckart, Dipl.-Ing.

(56) References cited:
- EP-A- 0 155 033
- EP-A- 0 393 191
- EP-A- 0 431 952
- US-A- 4 239 345
- US-A- 4 367 924

## Description

The invention relates to a liquid crystal electrooptical element that uses a chiral nematic liquid crystal which has metastable states and more particularly to a liquid crystal electrooptical element capable of being multiplex driven by using that bistability to perform switching.

Currently, the liquid crystal display devices being used as display devices for office equipment, etc., use a twisted nematic (TN) liquid crystal or a supertwisted nematic (STN) liquid crystal. For example, these display systems, which are described by M. Schadt and W. Helfrich in *Appl. Phys. Lett.* 18 (1971) 127 or by T. J. Scheffer and J. Nehring in *Appl. Phys. Lett.* 45 (1984) 1021, do not have a memory effect, and therefore they are driven by a multiplex drive method using voltage averaging or an active matrix drive method in which a transistor or other active element is provided at each picture element.

Other systems are being researched in addition to these, though they have not reached the application stage. For example, high speed technologies for voltage averaging are disclosed in JP-A-59-219720 and JP-A-60-196728, and systems that utilize bistable switching are disclosed in JP-B-1-51818 and JP-B-3-26368.

When a TN or STN type liquid crystal simple matrix is driven by the voltage averaging method, the ratio of the voltage V_{ON} for selecting the ON condition to the voltage V_{OFF} for selecting the OFF condition is given by the following equation, where the number of scanning lines is N.${\text{V}}_{\text{ON}} {\text{/V}}_{\text{OFF}} {\text{= ((N}}^{\text{1/2}} {\text{+ 1)/(N}}^{\text{1/2}} {\text{- 1))}}^{\text{1/2}}$

As can be seen from this equation, since V_{ON}/V_{OFF} approaches 1 as N becomes large, the contrast ratio also approaches 1. Considering both the electrooptical characteristic of current liquid crystal and the delay in the voltage waveform, N is limited up to approximately 500. Therefore, it is impossible to use this system to realize display devices for workstations, etc., requiring high definition displays. Also, the display characteristic is greatly dependent on the viewing angle, and the switching time is long.

The technology disclosed in the aforementioned JP-A-60-196728 is aimed at shortening the above switching time. By this means, the switching from ON to OFF can be speeded up by using a configuration in which the pretilt angle θ₁ on the lower substrate (angle formed between the director vector of the liquid crystal molecules in contact with the liquid crystal alignment film on the substrate and the substrate surface) and the pretilt angle θ₂ on the upper substrate have opposite signs. Also, the technology disclosed in the aforementioned JP-A-59-219720 is aimed at stabilizing the operating condition by adding a chiral substance to the liquid crystal material. However, even if these technologies are used bistability cannot be provided and the liquid crystal element must be driven by means of a voltage averaging method. Therefore, even by using these technologies high definition liquid crystal displays cannot be realized.

A chiral nematic liquid crystal electrooptical element with bistability is disclosed in JP-B-1-51818 (US-A-4,239,345). This liquid crystal electrooptical element has a 180° twist in its initial state, but after voltage is applied, it relaxes to two states different from its initial state, and those two states are extremely stable. The difference in twist between the two states is approximately 360°, and bistable switching is performed between the two states. The two states can be optically distinguished by sandwiching the liquid crystal electrooptical element between two polarizing plates. In this case, it is noted that a high contrast ratio can be achieved by configuring the element such that the result of dividing the product (R) of the birefringence Δn of the liquid crystal and the thickness d (µm) of the liquid crystal layer by the wavelength (λ) of the incident light (R/λ) is less than 2.

The technology disclosed in JP-B-3-26368 performs relatively rapid bistable switching by controlling the applied voltage. However, since it requires a rather high pretilt angle of 35°, the liquid crystal alignment film must be formed by oblique deposition, which is not practical.

Further, liquid crystal display devices requiring a high pretilt angle and liquid crystal display devices driven at a high duty ratio by a voltage-averaging method have a narrow effective viewing angle.

When a liquid crystal electrooptical element is used as a display element, normally a red, green and blue three-wavelength light source or white light source is used, and therefore the element must have a high contrast ratio and a high light transmittance in its ON state for light of those kinds of light sources. Therefore, it is necessary to know the conditions for obtaining a good display characteristic for those kinds of light sources.

Parameters that determine the display characteristic include the birefringence (Δn) of the liquid crystal material, the thickness (d) of the liquid crystal layer and the angles of the polarization axes of the two polarizing plates. The document JP-B-1-51818 states only that regarding $\text{R (= d·Δn)}$, a high contrast ratio can be achieved by making $\text{R/λ ≼ 2}$ when a monochromatic light is used as the light source, and it does not make any reference to the conditions required to achieve a high ON light transmittance or to the angle of the polarization axes. It does not discuss at all the conditions when white light is used. Though it is mentioned that a high contrast ratio can be achieved by making $\text{R/λ ≼ 2}$, the R/λ of the cells in the embodiments is greater than 2 in each case, and there are no data on the light transmittance or the contrast ratio. In additional experiments in which we used white light, we were able to optically distinguish the two metastable states, but we did not obtain a display characteristic that would make the element useful as a display device.

As described below, in a liquid crystal display using two metastable states whose twist angles are Φr ± 180° setting the polarization axes, which are among the parameters that determine the display characteristic, to the optimum angle is not easy. In such a bistable liquid crystal display, the twist angle of which is 180° in its initial state, one of the two metastable states is a uniform state with a twist angle of 0°, and therefore the light transmittance when the two polarizing plates are each disposed at a certain angle can be sought relatively easily. However, the twist angle of the other metastable state is approximately 360°, and in order to speed up the response as much as possible, the liquid crystal layer must be made as thin as possible. When the twist angle is large and the liquid crystal layer is thin like this, the linearly polarized light (white light) incident on the liquid crystal layer is emitted as elliptically polarized light, thus making it difficult to seek the transmitted light spectrum in the 360° twisted state. At this point, it has not been established yet how to set the polarization axes to increase both the contrast ratio and the ON transmittance when R is a certain value.

A liquid crystal electrooptical element according to the prior art portion of claim 1 is disclosed in US-A-4,239,345. Sandwiching the pair of substrates of a liquid crystal element between a pair of polarizing plates, properly selecting the orientation of the polarizing plates, and employing values of R falling in the range of 0. 1 ≼ R ≼ 1.06 is known from the documents EP-A-0 393 191, EP-A-431 952 and US-A-4,367,924.

The invention is intended to solve the above problems, and its first purpose is to offer a bistable liquid crystal electrooptical element that uses chiral nematic liquid crystal having a sufficient display characteristic as a display element with a high contrast ratio and a high ON transmittance. The second purpose of the invention is to offer a high definition liquid crystal display device with many scanning lines wherein the display characteristic of the bistable liquid crystal electrooptical element has little dependence on the viewing angle.

This object is achieved with a liquid crystal electrooptical element as claimed in claim 1. Preferred embodiments of the invention are subject-matter of the dependent claims.

In the liquid crystal electrooptical element of the invention, the respective stabilities of the initial state and the two metastable states are dependent on the ratio (d/pₒ) of the liquid crystal layer thickness (d) to the liquid crystal helical pitch pₒ. Where the twist angle in the initial state is Φr, the desired orientation state can be realized by satisfying the condition${\text{0.5 Φr/360° ≼ d/p}}_{\text{o}} \text{≼ 1.5 Φr/360°.}$

However, regarding the two metastable states obtained by applying a driving waveform, the metastable state in which the twist angle is roughly (Φr + 180°) becomes more unstable than the other metastable state under the condition${\text{d/p}}_{\text{o}} \text{≈ 0.5 Φr/360°}$ while under the condition${\text{d/p}}_{\text{o}} \text{≈ 1.5 Φr/360°}$ the metastable state in which the twist angle is roughly (Φr - 180°) becomes more unstable than the other metastable state. A liquid crystal display device having unbalanced stabilities of the two metastable states has the problem that greater energy is needed to select the unstable state, thus increasing the driving voltage or requiring that a pulse voltage be applied over a long period. Further, since the time required to relax from the selected unstable metastable state to the initial state (memory retention time) is short, relaxation may occur in the nonselection period when the display device has many scanning electrodes, thus degrading display quality.

The angle formed by the substrate interface and the director vector of the liquid crystal molecules (pretilt angle) also has an effect on the balance between the stabilities of the two metastable states. According to the results of experiments by the inventors, it was found that the stability of the metastable state of the twist angle which is (Φr + 180°) dropped as the pretilt angle became larger. Such a display has the same problems as described above. In addition, a great pretilt angle will provide a narrow effective viewing angle.

Further, in a liquid crystal display with bistability or multi-stability, the orientation states used for display are often not sufficiently stable, and plural orientation states may occur at the same time due to local displacement in the surface condition or shape of the substrate, resulting in poor display quality.

In liquid crystal displays related to this invention, a shape effect occurs at the edge of the transparent electrodes, and particularly when the twist angle (Φr + 180°) is selected as the metastable state by applying a driving waveform, a domain of the twist angle (Φr - 180°) appears at the above edge, which lowers the contrast ratio. This tendency is most evident when the direction of rubbing is parallel to a selected side of the pixels.

The chiral nematic liquid crystal of the invention has two metastable states as relaxation states which are different from its initial state; for example, assuming the initial state has a twisted structure in which the twist angle is 180°, the chiral nematic liquid crystal has two metastable states in which the twist angle is 0° (uniform state) in one and 360° in the other when a pulse voltage is applied with an absolute value large enough to cause a Frederick's transition. The waveform and absolute value of the pulse voltage applied next determine whether the molecular orientation becomes the metastable state of a 0° twist angle or a 360° twist angle and both metastable states spontaneously relax to the initial state.

The twist angle Φr in the initial state is not limited to 180°, and it can be set as desired. For example, assuming the twist angle Φr in the initial state is 90°, the two metastable states after Frederick's transition have twist structures of Φr ± 180°, i.e., -90° and 270°, and it was confirmed experimentally that switching between these metastable states was possible. The twist angles Φr ± 180° of the metastable states are not exact values but rather are roughly Φr ± 180°.

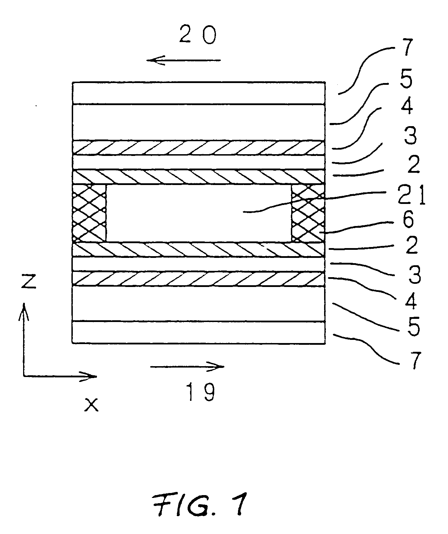

A cross section of the structure when the liquid crystal electrooptical element is applied to a liquid crystal display device is shown in FIG. 1. In the figure, 21 is the chiral nematic liquid crystal layer, 2 are upper and lower alignment films, 3 are upper and lower SiO₂ insulating films, 4 are the upper and lower transparent electrodes, 5 are the upper and lower glass substrates, 6 is a seal member used as a spacer, 7 are the upper and lower polarizing plates, 19 is the rubbing direction on the lower alignment film and 20 is the rubbing direction on the upper alignment film. In the figure, rubbing directions 19, 20 are oppositely parallel (Φr = 180°), and chiral nematic liquid crystal 21 is infused between the two substrates 5 mated together with seal member 6 between them.

In the initial state, the angles formed by the director vectors in contact with the alignment films and the substrate surfaces are θ₁ and θ₂ and they both have opposite signs. That is, assuming a twist angle of 180° in the initial state, the above two director vectors are roughly parallel to each other in opposing directions.

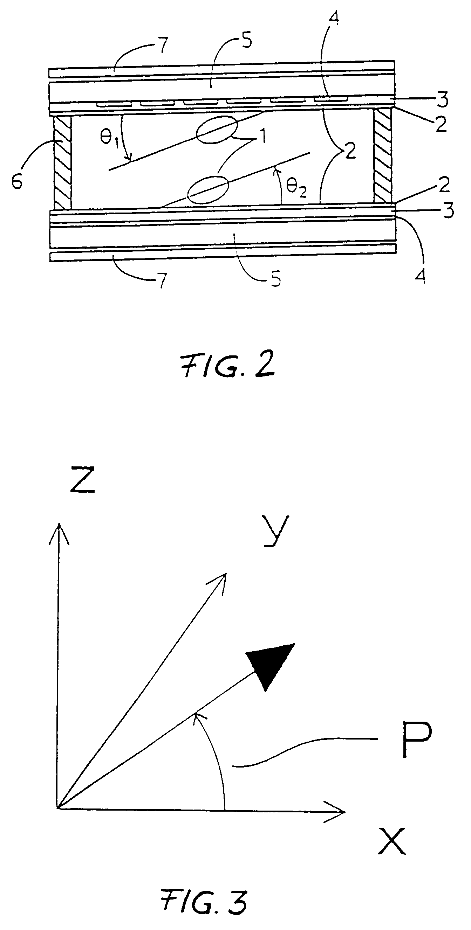

Assuming the direction of rubbing on aforementioned lower substrate 5 is the x axis and the normal on the substrate is the z axis, in the measurement of angles using the x axis direction as a reference, the angles of the polarization axes of lower polarization plate 7 on lower substrate 5 and polarization plate 7 on upper substrate 5 are P and A, respectively, and if the direction of twist of the chiral nematic liquid crystal viewed in the z axis direction is clockwise, a positive angle of P indicates a clockwise rotation of the polarization axis and vice versa. FIG. 3 shows the condition in which the angle between rubbing direction x and the polarization axis indicated by the arrow is defined as P when the helical structure of the liquid crystal has a clockwise twist when viewed in the z axis direction. A similar measurement was performed for angle A formed by the polarization axis of the upper polarization plate and the x axis. P ± nπ (n is an integer) and P are equivalent. The same is true for A.

The liquid crystal display device of the invention utilizes the switching between the two metastable states. The inventors confirmed experimentally that the time until the selected metastable state spontaneously relaxed to the initial state (memory retention time) was dependent on d/pₒ and discovered by statistical analysis of the results that a practical memory retention time for a display device could be achieved under the condition${\text{0.8 Φr/360° ≼ d/p}}_{\text{o}} \text{≼ 1.4 Φr/360°}$

A "practical retention time for a display device" as referred to here means the time equal to or longer than the time required for selection per line times the number of scanning lines and is essentially different from the bistability in the reference to a "lasting existence" JP-B-1-51818. Also, in the technology disclosed in the same publication, 25° to 45° is recommended for the pretilt angle, but in this invention, a practical retention time can be realized by applying the aforementioned condition formula in the 1° to 25° range; i.e., an angle range in which the pretilt angle can be achieved by the simple method of rubbing an organic film. Even when Φr is not 180° a practical retention time can be obtained by adjusting the helical pitch in a similar manner.

In a liquid crystal display with bistability or multi-stability, the orientation states used for display are often not sufficiently stable, and plural orientation states may occur at the same time due to a local displacement in the surface condition or shape of the substrate, resulting in poor display quality. This problem is solved when the condition${\text{10° ≼ Φ}}_{\text{o}} \text{≼ 80°}$ where Φₒ is the angle formed by a selected side of the pixel, is satisfied on each of the upper and lower substrates, in which case high definition display with many scanning lines is possible in a simple matrix system while maintaining a wide viewing angle and preventing the occurrence of undesirable domains in the pixels for a uniform displayed image.

The effective viewing angle can be widened when one or both of the angles formed by the rubbing directions and the vertical direction of the liquid crystal display as viewed by an observer is greater than or equal to 45°.

In a liquid crystal display with bistability or multi-stability as described above, particularly one in which switching is performed by applying an electric field, there are many cases in which orientation of a non-pixel area (between adjacent pixels) cannot be controlled because the electrodes are formed on only one substrate, resulting in light leaking and degrading the contrast ratio. As a countermeasure, the light transmittance in non-pixel areas is made lower than that in pixel areas, and this is achieved by making the light transmittance in non-pixel areas lower than that in pixel areas by adjusting the twist angle of the liquid crystal in the non-pixel areas as${\text{d}}_{\text{o}} {\text{/p}}_{\text{o}} \text{≽ 0.75}$ where dₒ is the thickness of the liquid crystal layer in the non-pixel areas.

The invention enables multiplex drive of chiral nematic liquid crystal having two metastable states by switching between the two metastable states. Where the twist angle Φr in the initial state and $\text{R (= Δn·d)}$ are parameters, it was shown that the purpose of the invention was achieved by appropriately setting the angles P and A formed by the polarization axes of the polarizing plates and one of the rubbing directions according to these parameters. The optimum values for the angles P and A are dependent on each other, and it was confirmed that their relationship was greatly influenced by Φr and R.

The Mauguin condition is a condition for rotating the polarization axis of the propagated light so that the polarization axis follows the twist of the liquid crystal molecules when linearly polarized light is incident in the direction of the helical axis of the chiral nematic liquid crystal. This is expressed by the equation$\text{p'·Δn » λ}$ where p' is the helical pitch of the liquid crystal when infused between two substrates that had undergone alignment treatment, ${\text{Δn = n}}_{\text{e}} {\text{- n}}_{\text{o}}$, (nₑ and nₒ being the refractive indices of the liquid crystal for extraordinary light and normal light, respectively), and λ is the wavelength of the light.

When linearly polarized light having a polarization axis parallel (or perpendicular) to the alignment direction n1 of the liquid crystal molecules in contact with one substrate is introduced in a liquid crystal cell in which the parameters have been set so that the above Mauguin condition is satisfied, the axis of the polarized light is rotated to follow the twist of the liquid crystal molecule alignment so that it becomes nearly polarized light polarized parallel (or perpendicular) to the alignment direction n2 of the liquid crystal molecules in contact with the other substrate, and the light is emitted. Also, when linearly polarized light having a polarization axis in a direction other than parallel (or perpendicular) to n1 is introduced, the light becomes elliptically polarized and is emitted. Widely used TN type liquid crystal display devices perform switching between a homeotropically aligned state and a twisted state that satisfy the Mauguin condition. That twist angle is 90°, and the optimum value for p'·Δn is approximately 1.88 µm (p' ≈ 20 µm, Δn ≈ 0.094). By setting the two polarizing plates so that their polarization axes are parallel (or perpendicular) to n1 and n2, respectively, an extremely high contrast ratio and ON transmittance can be achieved.

The above does not apply to the relationship between the display characteristic of the bistable liquid crystal display device used in this invention and the Mauguin condition. In this patent specification, where Φr is the twist angle in the initial alignment state, switching is performed between two twist states in which the twist angle is Φr + 180° and Φr - 180°. The twist state of the twist angle whose absolute value is the larger one is referred to as S⁺ and the other is referred to as S⁻. Here, each of the parameters are set so that both S⁺ and S⁻ satisfy the Mauguin condition, and if the two polarizing plates are disposed such that their respective polarization axes are parallel (or perpendicular) to n1 and n2, S⁺ and S⁻ can hardly be distinguished optically. This is because, since n1 and n2 of S⁺ match n1 and n2 of S⁻, respectively, both the emitted light of S⁺ and the emitted light of S⁻ become linearly polarized light polarized in the same direction. Also, when the two polarization plates are disposed such that their polarization axes are other than parallel (or perpendicular) to n1 and n2, respectively, then S⁺ and S⁻ can be optically distinguished but the display element does not have a display characteristic that is suited to practical application. This fact is irrespective of the value of Φr.

However, if S⁺, for example, should not satisfy the Mauguin condition, then the following can be considered. A case is explained in which Φr is roughly 180°, which is the angle at which the optimum display characteristic is expected to be achieved. Below, L is the helical pitch in S⁺.
(1) When ${\text{L·(n}}_{\text{e}} {\text{- n}}_{\text{o}} \text{)}$ is sufficiently smaller than λ:
   S⁺ is optically isotropic, but it behaves as an optically active medium with several degrees of rotation power per 1 µm (de Gennes, P.G., *The Physics of Liquid Crystals,* p. 226, Oxford University Press (1974)). When an optical rotation angle of Φᵣₒₜ is assumed, it is clear that the light transmittance of S⁺ reaches a minimum where the angle Φ₁₂ formed by the polarization axes of the two polarizing plates is 90° + Φᵣₒₜ.
   The twist angle of S⁻, on the other hand, is 0°. However, since chiral nematic liquid crystal has an intrinsic twist, the twist angle of S⁻ is not strictly 0° even if Φr = 180°. However, if the twist angle is not very large, S⁻ may be considered to be a birefringent medium with no twist under the condition Φr ≈ 180°. Therefore, if the angle (Φn) formed by the direction of the polarization axis of one polarizing plate and the average alignment direction of the liquid crystal molecules in S⁻ is set to approximately 45° in order to raise the light transmittance of S⁻ under the condition Φ₁₂ = 90° + Φᵣₒₜ, it should be possible to obtain an extremely high contrast ratio and ON state brightness.
(2) When ${\text{L·(n}}_{\text{e}} {\text{- n}}_{\text{o}} \text{)}$ is larger than λ but is not large enough to satisfy the Mauguin condition:
   Even if Φn = 0° in this case, the emitted light of S⁺ becomes elliptically polarized light and the direction of the longer axis of the ellipse is not parallel to n2. Therefore, a high contrast ratio and ON state brightness can be expected assuming that, for example, Φn = 0° and Φ₁₂ = 90°.
(3) When ${\text{L·(n}}_{\text{e}} {\text{- n}}_{\text{o}} \text{)}$ is a value intermediate between (1) and (2) above:

In this case, a display characteristic intermediate between (1) and (2) should be expected. It is not easy to imagine the display characteristic when Φr has shifted to a value larger than 180°. However, if the Mauguin condition is not satisfied, it should be possible to avoid the situation in which the polarization conditions of the emitted light in S⁺ and S⁻ become nearly the same and cannot be optically distinguished.

In this invention the relaxed state is regarded as the metastable state because the memory retention time is not infinite. It may be possible, however, that the stability of the metastable state extremely increases and that the memory retention time approaches infinite. Of course, this invention applies to the case of an infinite memory retention time. Though the term "optically isotropic medium" in general means that Δn of the medium is zero, in the present patent specification the medium is regarded optically isotropic if the apparent Δn is much smaller than its intrinsic Δn.

Preferred embodiments of the invention will be described below in more detail with reference to the drawings, in which:
- FIG. 1: is a cross section of a liquid crystal electrooptical element,
- FIG. 2: is a cross section of a liquid crystal electrooptical element,
- FIG. 3: is a graph defining the angles of the polarization axes,
- FIG. 4: is a diagram showing the driving waveforms,
- FIG. 5: is a diagram showing the optimum values for angles P and A of the polarization axes,
- FIG. 6: is a diagram showing the driving waveforms,
- FIG. 7: is a diagram for explaining the relationship between the electrodes and the alignment directions,
- FIG. 8: is a block diagram of the driving circuit,
- FIG. 9: is a diagram for explaining the relationship between the observer and the coordinate axes,
- FIG. 10: is a diagram for explaining the relationship between the alignment directions and the polarization axes,
- FIG. 11: is a diagram showing the driving waveforms,
- FIG. 12: is a cross section showing the structure of the liquid crystal display element of the invention,
- FIG. 13: is a diagram showing the driving waveforms.

Before an embodiment of the invention is explained a plurality of examples will be described. These examples are not embodiments of the invention but will be helpful to a better understanding of certain features of the invention.

A cross section of the liquid crystal electrooptical element used in this example is shown in FIG. 1. A transparent electrode 4, an insulating SiO₂ film 3 and a liquid crystal alignment film 2 are formed on each of an upper substrate 5 and a lower substrate 5, after which they undergo rubbing. A polyimide is used as the liquid crystal alignment film. Assuming an initial alignment state in which Φr = 180°, for example, the two substrates are mated together via a spacer 6 so that the rubbing directions are parallel to each other in opposing directions. Also, assuming Φr = 90°, the two substrates are mated together so that the angle formed by the two rubbing directions is 90°. The liquid crystal electrooptical element was fabricated by infusing a chiral nematic liquid crystal 21 between these two substrates and disposing the polarizing plates 7 on them. To use this liquid crystal electrooptical element as a reflective type, a reflective plate need only be disposed on the outside of the upper polarizing plate or the lower polarizing plate. The liquid crystal material used included a nematic liquid crystal having a positive dielectric anisotropy (Δλ > 0) available on the market and an optically active compound that induces a helical structure added to the nematic liquid crystal to adjust the pₒ. In the first to the seventh examples, E. Merck's R-811 was used as the optically active compound, while in the eighth and later examples, E. Merck's S-811 was used.

The Δn up until now referred to the apparent Δn, but in the following embodiments, the liquid crystal's intrinsic Δn was used. This is because the pretilt angle is generally 1° to 5°, and therefore the apparent Δn in the non-twisted state and the intrinsic Δn of the liquid crystal can be considered to be nearly equal. However, when the pretilt angle is large, the intrinsic Δn of the liquid crystal and the apparent Δn differ greatly and the apparent Δn must be used. Further, since the molecular alignment in a case in which display is performed in a memory state without applying voltage differs from that in a case in which display is performed in a state in which voltage is applied, the values of the apparent Δn must be different. However, since the voltage is about 1 volt, the difference in the apparent Δn when a voltage is applied and when a voltage is not applied is very small and that difference may be ignored. Therefore, it is natural that the average apparent Δn during display operation be used, but the intrinsic Δn of the liquid crystal is used in the following examples. As described above, when display is performed by applying a large voltage such that the alignment distribution deviates greatly or when the pretilt angle is large the average apparent Δn during display operation must be used.

In order to set R to various values, several varieties of liquid crystal material with differing Δn were used and the thickness of the liquid crystal layer was set between 1.7 µm and 25.0 µm. The Δn of the liquid crystal materials and the number of the example in which each liquid crystal material was used are shown in TABLE 1 below. Also, though the pretilt angle differed depending on the liquid crystal material, the alignment film and the rubbing method, it was about 1° to 5° in the first to the seventh examples.

**TABLE 1**

| Liquid crystal material | Δn | Example |
|---|---|---|
| ZLI-4119 | 0.06 | 1-1 |
| ZLI-4262 | 0.10 | 1-2 to 9, 1-12, 1-15, 1-26 to 27, 2-1 and 2, 3-1 and 2, 4-1 and 2, 5-1 and 2, 6, 7 |
| ZLI-1370 | 0.14 | 1-10, 1-14, 2-4 and 5, 3-4 and 5, 4-4 and 5, 5-4 and 5 |
| ZLI-2140-000 | 0.15 | 1-13 |
| ZLI-4454-000 | 0.159 | 1-16 to 19, 1-21 and 22, 2-3, 3-3, 4-3, 5-3 |
| ZLI-4155 | 0.186 | 1-11, 1-24 |
| ZLI-5049-000 | 0.208 | 1-20, 1-23, 1-25 |

We evaluated whether or not the liquid crystal element satisfies the Mauguin condition using the helical pitch L of the metastable state with the larger absolute value of the twist angle between the two metastable states, the Δn and the wavelength (380 to 780 nm) of the light. The twist angle Φr in the initial state and L have the following relationship.$\text{L = {2π/(Φr + 180°)}·d}$

The left side (L·Δn) of the inequality which describes the Mauguin condition and R have the following relationship.$\text{L·Δn = 2π·R/(Φr + 180°)}$

Therefore, setting the direction of the polarization axis according to the value of L·Δn is nothing more than setting the direction of the polarization axis according to the value of R and Φr. Also, only when Φr = 180° does L·Δn equal the retardation of S⁻, because the relationship between Φr and L shows that L is equal to d when Φr = 180°.

Rubbing direction 19 on lower substrate 5 is the x axis. In the first to the seventh examples, the helical structure observed in the direction normal to the substrate (z axis direction) is a right handed twist (clockwise twist), and therefore the angle P of the polarization axis of lower polarization plate 7 is defined as shown in FIG. 3. Of course, P and P ± nπ (n is an integer) are equivalent. The same is true for A. A set of (P, A) and a set of (P ± nπ/2, A ± nπ/2) are also equivalent. For example, (P, A) = (160°, 50°) and (P, A) = (70°, 140°) yield the same display characteristic.

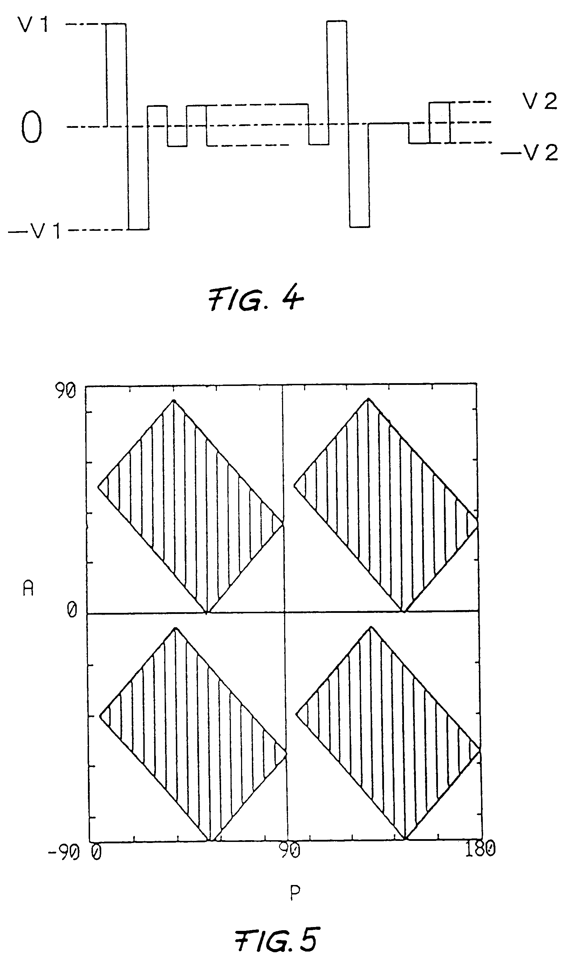

Switching between the two metastable states in which the twist angles of the liquid crystal are approximately 360° and 0°, respectively, is performed by applying a voltage waveform such as that shown in FIG. 4. We also set P and A to various angles and measured the light transmittance in the 360° and 0° states to calculate the contrast ratio. We used a polarizing microscope, model BH-2, produced by Olympus and a white light source attached to it. However, the light transmittance of the polarizing plate used was approximately 48%.

The display properties of a reflective type can be evaluated by using the display properties of a transmission type as shown below. In the transmission type liquid crystal display device shown in Fig. 1, assume that it is used as a reflective type by placing a reflector plate under the lower polarizing plate. Assume that light of intensity Io is introduced to the upper polarizing plate and light of intensity Id is reflected off. Assume that the intensity of the incident light going into the liquid crystal layer after having passed through the upper polarizing plate is Ia, the intensity of the light transmitted through the lower polarizing plate is Ib, the intensity of the incident light going into the lower polarizing plate again after being reflected off the reflection plate is also Ib, the intensity of the incident light going into the liquid crystal layer again after passing through the lower polarizing plate is Ic, and the intensity of the light (reflected light) transmitted through the upper polarizing plate is Id. The ratio of Id to Ic is equal to the ratio of Ib to Ia, hence the following is true:$\text{Id = Ic·Ib/Ia}$

Next, assume the light transmissivity of the polarizing plates for unpolarized light is x and the light transmissivity of the polarizing plates for the linear polarized light which is polarized parallel to the light transmission axis of polarizing plate is y, then Ia and Ic can be expressed as follows:$\begin{matrix}\begin{matrix}\begin{matrix}\text{Ia = x·Io}\end{matrix} \\ \begin{matrix}\text{Ic = y·Ib}\end{matrix}\end{matrix}\end{matrix}$

When the equations (2) and (3) are substituted into the equation (1),$\begin{matrix}\begin{matrix}{\text{Id = (Ib}}^{\text{2}} \text{/Io)·(y/x)} \\ {\text{Id/Io = (Ib/Io)}}^{\text{2}} \text{·(y/x)}\end{matrix}\end{matrix}$ can be obtained. Exactly speaking y ≠ 1, however, it is close to y = 1. Further, we will distinguish light intensities in ON and OFF states by adding (ON) and (OFF), then the contrast ratio CR in a reflection type can be expressed as follows:${\text{CR = Id}}_{\text{(ON)}} {\text{Id}}_{\text{(OFF)}} {\text{= (Ib}}_{\text{(ON)}} {\text{/Ib}}_{\text{(OFF)}} {\text{)}}^{\text{2}}$

Thus, the reflectivity, Id/Io, and contrast ratio in a reflective type can be obtained from the transmissivity, Ib/Io, and contrast ratio in transmission type.

### First Example: Φr = 180°

$\text{(1-1): R = 0.102}$

We adjusted pₒ so that Φr was nearly 180° by adding an appropriate amount of the optically active compound R-811 (E. Merck) to ZLI-4119 (Δn = 0.060) produced by E. Merck. The thickness d of the liquid crystal layer was 1.7 µm. $\text{L = d = 1.7 µm}$ and ${\text{d/p}}_{\text{o}} \text{≈ 0.5}$. The relationship between L•Δn and the wavelength is given by$\text{L·Δn = 0.102 < λ (0.38 to 0.78 µm)}$ Therefore, the Mauguin condition is not satisfied.

The light transmittance I⁺ in the 360°-twisted state, The transmittance I⁻ in the 0° twisted state and the contrast ratio CR in various combinations of P and A are shown in TABLE 2 (second digit after the decimal point is rounded up if the third digit is 5 or greater and rounded down if less than 5).

A light transmittance of 100 corresponds to an intensity of the transmitted light equal to that of the incident light. Also, the values of L·Δn, the wavelength (λ) and d and L are noted below the table. That is, combinations Nos. 1 to 13 are examples, and combinations 14 to 17 are comparison examples.

The meanings of T and R are as follows. The "o" in the T column indicates the combination is good enough to be used as a transmission type display element, and the "o" in the R column indicates that the combination is good enough to be used as a reflective type display element (Thus, R in this and other tables should be distinguished from $\text{R = Δn·d}$). An asterisk (*) in both the T and R columns indicates that the respective combination of P and A is given as comparison example. When R = 0.102, the combinations Nos. 1 to 6 can be used as both transmission type and reflective type elements. Also, combinations Nos. 7 to 13 are not good enough to be used as transmission type elements. However, since greater emphasis is placed on the brightness in the bright state than on the contrast ratio when used as a reflective type element, they can be used as reflective type elements. The contrast ratio in a reflective type element should be at least 1:2. Therefore, if the contrast ratio when measured as a transmission type element is 1:1.4, it is good enough to be used as a reflective type element. Combinations Nos. 14 to 17 given as comparison examples can neither be used as transmission type nor as reflective type elements.

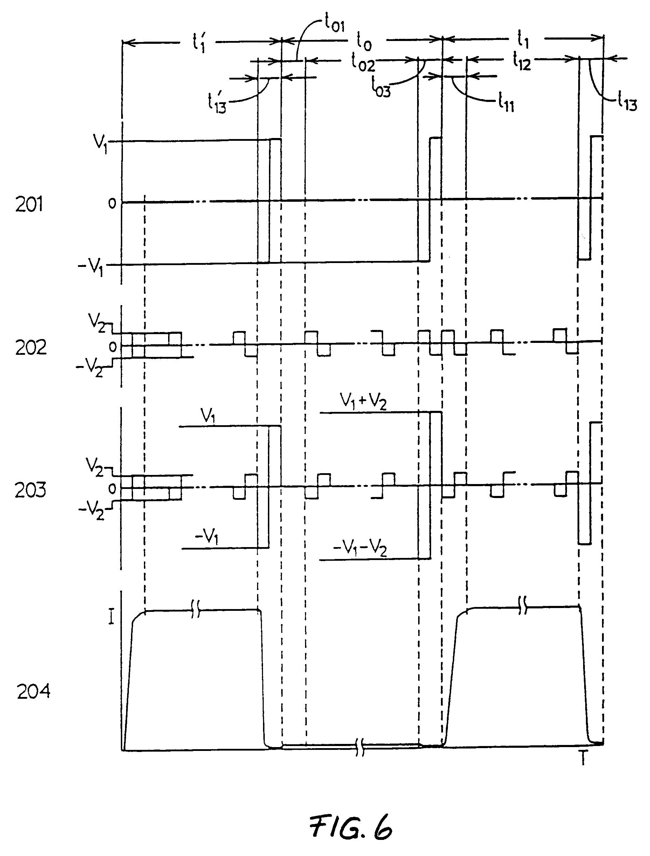

The results of visual evaluation by human eyes to determine whether or not an element can be used as a reflective type by actually disposing a reflective plate on it are depicted in FIG. 5. We found that if P and A were combined within the range indicated by shading, the element could be used as a reflective type. The results for various R are shown below, and all tables are read the same.
(1-2): R = 0.16, the results are shown in TABLE 3
(1-3): R = 0.2, the results are shown in TABLE 4.
(1-4): R = 0.22, the results are shown in TABLE 5.
(1-5): R = 0.24, the results are shown in TABLE 6.
(1-6): R = 0.28, the results are shown in TABLE 7.
(1-7): R = 0.32, the results are shown in TABLE 8.
(1-8): R = 0.36, the results are shown in TABLE 9.
(1-9): R = 0.4, the results are shown in TABLE 10.
(1-10): R = 0.42, the results are shown in TABLE 11.
(1-11): R = 0.428, the results are shown in TABLE 12.
(1-12): R = 0.44, the results are shown in TABLE 13.
(1-13): R = 0.45, the results are shown in TABLE 14.
(1-14): R = 0.56, the results are shown in TABLE 15.
(1-15): R = 0.64, the results are shown in TABLE 16.
(1-16): R = 0.7, the results are shown in TABLE 17.
(1-17): R = 0.72, the results are shown in TABLE 18.
(1-18): R = 0.78, the results are shown in TABLE 19.
(1-19): R = 0.84, the results are shown in TABLE 20.
(1-20): R = 0.96, the results are shown in TABLE 21.
(1-21): R = 1.02, the results are shown in TABLE 22.
(1-22): R = 1.05, the results are shown in TABLE 23.
(1-23): R = 1.06, the results are shown in TABLE 24.
(1-24): R = 1.08, the results are shown in TABLE 25.
(1-25): R = 1.12, the results are shown in TABLE 26.
(1-26): R = 1.9, the results are shown in TABLE 27.
(1-27): R = 2.5, the results are shown in TABLE 28.
(1-28) In the above examples, we confirmed that practical implementation of the liquid crystal electrooptical element was possible if Φr was in the range 160° ≼ Φr ≼ 200°. The mutual settings for P and A differ in reflective type and transmission type elements because, as described above, the contrast ratio in reflective type elements differs from that in transmission type elements. Their relationship is tabulated below.

### (1) Reflective type element

(1) When 0.102 ≼ R ≼ 0.4 or 0.78 ≼ R ≼ 0.96,$\begin{matrix}\begin{matrix}\text{[P + α1 ≼ A ≼ P + α2 and -P + β1 ≼ A ≼ -P + β2] or} \\ \text{[P + γ1 ≼ A ≼ P + γ2 and -P + δ1 ≼ A ≼ -P + δ2]}\end{matrix}\end{matrix}$
(2) When 0.72 ≼ R ≼ 0.78,$\begin{matrix}\begin{matrix}\text{[P + α1 ≼ A ≼ P + α2 and -P + β1 ≼ A ≼ -P + β2] or} \\ \text{[P + γ1 ≼ A ≼ P + γ2]}\end{matrix}\end{matrix}$
(3) When 0.40 ≼ R ≼ 0.72, 0.96 ≼ R ≼ 0.99,
   or 1.05 ≼ R ≼ 1.12,$\begin{matrix}\begin{matrix}\text{[P + α1 ≼ A ≼ P + α2] or} \\ \text{[P + γ1 ≼ A ≼ P + γ2]}\end{matrix}\end{matrix}$
(4) When 0.99 ≼ R ≼ 1.02,$\text{[P + α1 ≼ A ≼ P + α2]}$
(5) When 1.02 ≼ R ≼ 1.05,$\text{[P + γ1 ≼ A ≼ P + γ2]}$

Provided:

| | | |
|---|---|---|
| α1 = | -109.4·R - 133.1 | (0.102 ≼ R ≼ 1.02) |
| | -225.0 | (1.05 ≼ R ≼ 1.12) |
| α2 = | -45.0, | (0.102 ≼ R ≼ 0.32) |
| | 6696.4·R³ - 8720.1·R² + 3354.7·R - 445.0 | (0.32 ≼ R ≼ 0.64) |
| | 1519.0·R³ - 4175.2·R² + 3568.7·R - 1087.0 | (0.64 ≼ R ≼ 1.02) |
| | -333.3·R + 175.0, | (1.05 ≼ R ≼ 1.12) |
| β1 = | -9114.6·R³ + 6666.7·R² - 1577.1·R + 74.0 | (0.102 ≼ R ≼ 0.36) |
| | -55.0 | (0.36 ≼ R ≼ 0.40) |
| | -75.0 | (0.72 ≼ R ≼ 0.96) |
| β2 = | 9114.6·R³- 6666.7·R² + 1577.1·R - 74.0 | (0.102 ≼ R ≼ 0.36) |
| | 55.0 | (0.36 ≼ R ≼ 0.40) |
| | 75.0 | (0.72 ≼ R ≼ 0.96) |
| γ1 = | 312.5·R² - 187.5·R - 37.0 | (0.102 ≼ R ≼ 0.32) |
| | 5208.3·R³ - 7500.0·R² + 3341.6·R - 537.0 | (0.32 ≼ R ≼ 0.64) |
| | 1030.2·R³ - 2722.0·R² + 2225.9·R - 684.0 | (0.64 ≼ R ≼ 0.99) |
| | 197575.9·R³ - 626821.6·R² + 662332.3·R - 233217.9 | (1.02 ≼ R ≼ 1.12) |
| γ2 = | -625.0·R² + 225.0·R + 27.0 | (0.102 ≼ R ≼ 0.32) |
| | 7254.4·R³ - 10245.5·R² + 4448.2·R - 577.0 | (0.32 ≼ R ≼ 0.64) |
| | -558.0·R² + 736.6·R - 267.9 | (0.64 ≼ R ≼ 0.99) |
| | -5555.5·R² + 11500.0·R - 6024.9 | (1.02 ≼ R ≼ 1.12) |
| δ1 = | -6746.0·R³ + 5571.4·R² - 1504.0·R + 166.9 | (0.102 ≼ R ≼ 0.40) |
| | -55.6·R + 68.4 | (0.78 ≼ R ≼ 0.96) |
| δ2 = | 6746.0·R³ - 5571.4·R² + 1504.0·R + 13.1 | (0.102 ≼ R ≼ 0.40) |
| | 55.6·R + 111.6 | (0.78 ≼ R ≼ 0.96) |

### (2) Transmission type element

(1) When 0.1 ≼ R ≼ 0.22,$\text{A = P + α, where α = -82·R + α1}$
(2) When 0.22 < R ≼ 0.42,$\begin{matrix}\begin{matrix}\text{A = P + α, where α = -82·R + α1, or} \\ \text{A = -P + β1}\end{matrix}\end{matrix}$
(3) When 0.42 < R ≼ 0.44,$\begin{matrix}\begin{matrix}\text{A = P + α, where α = - 137.5·R + α2, or} \\ \text{A = - P + β1}\end{matrix}\end{matrix}$
(4) When 0.44 < R < 0.473,$\text{A = P + γ, where -137.5·R - 75 ≼ γ ≼ -60}$
(5) When 0.473 ≼ R ≼ 0.7,$\begin{matrix}\begin{matrix}\text{A = P + α, where α = -137.5·R + α2, or} \\ \text{A = P + α3}\end{matrix}\end{matrix}$
(6) When 0.7 < R ≼ 1.06,$\text{A = -P + β1}$
   However,$\begin{matrix}\begin{matrix}{\text{-99° ≼ α1 ≼ -58°}}_{\text{-}} \text{75° ≼ α2 ≼ -35°} \\ \text{-100° ≼ α3 ≼ -60° 70° ≼ β1 ≼ 110°}\end{matrix}\end{matrix}$

### (3) The conditions for achieving a contrast ratio greater than 10 and an ON transmittance of 10% in a transmission type element in which Φr is 180° are listed below.

(1) When 0.1 ≼ R ≼ 0.22,$\text{A = P + α, where α = -82·R + α1}$
(2) When 0.22 < R ≼ 0.42,$\begin{matrix}\begin{matrix}\text{A = P + α, where α = -82·R + α1, or} \\ \text{A = -P + β1}\end{matrix}\end{matrix}$
(3) When 0.42 < R ≼ 0.44,$\begin{matrix}\begin{matrix}\text{A = P + α, where α = - 137.5·R + α2, or} \\ \text{A = - P + β1}\end{matrix}\end{matrix}$
(4) When 0.44 < R ≼ 0.7,$\begin{matrix}\begin{matrix}\text{A = P + α, where α = -137.5·R + α2, or} \\ \text{A = P + α3}\end{matrix}\end{matrix}$
(5) When 0.7 < R ≼ 1.06,$\text{A = -P + β1}$
   However,$\begin{matrix}\begin{matrix}\text{-94° ≼ α1 ≼ -63° -70° ≼ α2 ≼ -40°} \\ \text{-95° ≼ α3 ≼ -65° 75° ≼ β1 ≼ 105°}\end{matrix}\end{matrix}$

### Second Example: Φr = 90°

In this example, pₒ was adjusted so that Φr was approximately 90°. For example, ZLI-4262 was used as the liquid crystal material and d = 2.0 µm in example 2-1. L = 2.67 µm and ${\text{d/p}}_{\text{o}} \text{≈ 0.3}$.

Data related to various R are shown below and are read the same as in the first example.
(2-1): R = 0.2, the results are shown in Table 29.
(2-2): R = 0.28, the results are shown in Table 30.
(2-3): R = 0.318, the results are shown in Table 31.
(2-4): R = 0.56, the results are shown in Table 32.
(2-5): R = 0.84, the results are shown in Table 33.

### Third Example: Φr = 160°

In this example, pₒ was adjusted so that Φr was approximately 160°. For example, ZLI-4262 was used as the liquid crystal material and d = 2.0 µm in example 3-1. L = 2.12 µm and ${\text{d/p}}_{\text{o}} \text{≈ 0.5}$.

Data related to various R are shown below.
(3-1): R = 0.2, the results are shown in Table 34.
(3-2): R = 0.28, the results are shown in Table 35.
(3-3): R = 0.318, the results are shown in Table 36.
(3-4): R = 0.56, the results are shown in Table 37.
(3-5): R = 0.84, the results are shown in Table 38.

### Fourth Example: Φr = 200°

In this example, pₒ was adjusted so that Φr was approximately 200°. For example, ZLI-4262 was used as the liquid crystal material and d = 2.0 µm in example 4-1. L = 1.89 µm and ${\text{d/p}}_{\text{o}} \text{≈ 0.6}$.

Data related to various R are shown below.
(4-1): R = 0.2, the results are shown in Table 39.
(4-2): R = 0.28, the results are shown in Table 40.
(4-3): R = 0.318, the results are shown in Table 41.
(4-4): R = 0.56, the results are shown in Table 42.
(4-5): R = 0.84, the results are shown in Table 43.

### Fifth Example: Φr = 270°

In this example, pₒ was adjusted so that Φr was approximately 270°. For example, ZLI-4262 was used as the liquid crystal material and d = 2.0 µm in example 5-1. L = 1.6 µm and ${\text{d/p}}_{\text{o}} \text{≈ 0.8}$.

Data related to various R are shown below.
(5-1): R = 0.2, the results are shown in Table 44.
(5-2): R = 0.28, the results are shown in Table 45.
(5-3): R = 0.318, the results are shown in Table 46.
(5-4): R = 0.56, the results are shown in Table 47.
(5-5): R = 0.84, the results are shown in Table 48.

### Sixth Example: Φr = 140°, R = 0.28

In this example, pₒ was adjusted by adding an appropriate amount of optically active compound to ZLI-4262 so that Φr was approximately 140°. d = 2.8 µm, L = 3.15 µm and ${\text{d/p}}_{\text{o}} \text{≈ 0.4}$.

The data from these results are shown in TABLE 49.

### Seventh Example: Φr = 220°, R = 0.28

In this example, pₒ was adjusted by adding an appropriate amount of optically active compound to ZLI-4262 so that Φr was approximately 220°. d = 2.8 µm, L = 2.52 µm and ${\text{d/p}}_{\text{o}} \text{≈ 0.6}$.

The data from these results are shown in TABLE 50.

The results shown here are for only one example. The inventors sought the conditions for achieving a contrast ratio of 1:2 or greater when 160° ≼ Φr ≼ 200° by analyzing many measurement results. For example, the combinations of P and A that satisfy such conditions when R = 0.102 are shown in FIG. 5. Combinations of P and A that can be used are in the shaded range. Considering the fact that the combinations of (P ± nπ/2, A ± nπ/2) and (P, A) are equivalent, the range is established by 8 straight lines whose slope is 1 or -1. Further, the range is dependent on R. Relationships between P and A at particular values of R are shown below.

### (1) Reflective type element

(1) When 0.102 ≼ R ≼ 0.4 or 0.78 ≼ R ≼ 0.96,$\begin{matrix}\begin{matrix}\text{[P + α1 ≼ A ≼ P + α2 and -P + β1 ≼ A ≼ -P + β2] or} \\ \text{[P + γ1 ≼ A ≼ P + γ2 and -P + δ1 ≼ A ≼ -P + δ2]}\end{matrix}\end{matrix}$
(2) When 0.72 ≼ R ≼ 0.78,$\begin{matrix}\begin{matrix}\text{[P + α1 ≼ A ≼ P + α2 and -P + β1 ≼ A ≼ -P + β2] or} \\ \text{[P + γ1 ≼ A ≼ P + γ2]}\end{matrix}\end{matrix}$
(3) When 0.40 ≼ R ≼ 0.72, 0.96 ≼ R ≼ 0.99,
   or 1.05 ≼ R ≼ 1.12,$\begin{matrix}\begin{matrix}\text{[P + α1 ≼ A ≼ P + α2] or} \\ \text{[P + γ1 ≼ A ≼ P + γ2]}\end{matrix}\end{matrix}$
(4) When 0.99 ≼ R ≼ 1.02,$\text{[P + α1 ≼ A ≼ P + α2]}$
(5) When 1.02 ≼ R ≼ 1.05,$\text{[P + γ1 ≼ A ≼ P + γ2]}$

Provided:

| | | |
|---|---|---|
| α1 = | -109.4·R - 133.1 | (0.102 ≼ R ≼ 1.02) |
| | -225.0 | (1.05 ≼ R ≼ 1.12) |
| α2 = | -45.0, | (0.102 ≼ R ≼ 0.32) |
| | 6696.4·R³ - 8720.1·R² + 3354.7·R - 445.0 | (0.32 ≼ R ≼ 0.64) |
| | 1519.0·R³ - 4175.2·R² + 3568.7·R - 1087.0 | (0.64 ≼ R ≼ 1.02) |
| | -333.3·R + 175.0, | (1.05 ≼ R ≼ 1.12) |
| β1 = | -9114.6·R³ + 6666.7·R² - 1577.1·R + 74.0 | (0.102 ≼ R ≼ 0.36) |
| | -55.0 | (0.36 ≼ R ≼ 0.40) |
| | -75.0 | (0.72 ≼ R ≼ 0.96) |
| β2 = | 9114.6·R³- 6666.7·R² + 1577.1·R - 74.0 | (0.102 ≼ R ≼ 0.36) |
| | 55.0 | (0.36 ≼ R ≼ 0.40) |
| | 75.0 | (0.72 ≼ R ≼ 0.96) |
| γ1 = | 312.5·R² - 187.5·R - 37.0 | (0.102 ≼ R ≼ 0.32) |
| | 5208.3·R³ - 7500.0·R² + 3341.6·R - 537.0 | (0.32 ≼ R ≼ 0.64) |
| | 1030.2·R³ - 2722.0·R² + 2225.9·R - 684.0 | (0.64 ≼ R ≼ 0.99) |
| | 197575.9·R³ - 626821.6·R² + 662332.3·R - 233217.9 | (1.02 ≼ R ≼ 1.12) |
| γ2 = | -625.0·R² + 225.0·R + 27.0 | (0.102 ≼ R ≼ 0.32) |
| | 7254.4·R³ - 10245.5·R² + 4448.2·R - 577.0 | (0.32 ≼ R ≼ 0.64) |
| | -558.0·R² + 736.6·R - 267.9 | (0.64 ≼ R ≼ 0.99) |
| | -5555.5·R² + 11500.0·R - 6024.9 | (1.02 ≼ R ≼ 1.12) |
| δ1 = | -6746.0·R³ + 5571.4·R² - 1504.0·R + 166.9 | (0.102 ≼ R ≼ 0.40) |
| | -55.6·R + 68.4 | (0.78 ≼ R ≼ 0.96) |
| δ2 = | 6746.0·R³ - 5571.4·R² + 1504.0·R + 13.1 | (0.102 ≼ R ≼ 0.40) |
| | 55.6·R + 111.6 | (0.78 ≼ R ≼ 0.96) |

By satisfying these conditions, it is possible to offer display elements suited to practical implementation as reflective type elements. Some are also suited to implementation as transmission type display elements.

Further, where 160° ≼ Φr ≼ 200°, we sought the conditions for achieving a contrast ratio greater than 1:10 and an ON transmittance greater than approximately 10% to facilitate practical implementation of the element as a transmission type display element. The results are shown below.
(1) When 0.1 ≼ R ≼ 0.22,$\text{A = P + α, where α = -82·R + α1}$
(2) When 0.22 < R ≼ 0.42,$\begin{matrix}\begin{matrix}\text{A = P + α, where α, = -82·R + α1, or} \\ \text{A = -P + β1}\end{matrix}\end{matrix}$
(3) When 0.42 < R ≼ 0.44,$\begin{matrix}\begin{matrix}\text{A = P + α, where α = - 137.5·R + α2, or} \\ \text{A = - P + β1}\end{matrix}\end{matrix}$
(4) When 0.44 < R < 0.473,$\text{A = P + γ, where -137.5·R - 75 ≼ γ ≼ -60}$
(5) When 0.473 ≼ R ≼ 0.7,$\begin{matrix}\begin{matrix}\text{A = P + α, where α = -137.5·R + α2, or} \\ \text{A = P + α3}\end{matrix}\end{matrix}$
(6) When 0.7 < R ≼ 1.06,$\text{A = -P + β1}$
   However,$\begin{matrix}\begin{matrix}\text{-99° ≼ α1 ≼ -58° -75° ≼ α2 ≼ -35°} \\ \text{-100° ≼ α3 ≼ -60° 70° ≼ β1 ≼ 110°}\end{matrix}\end{matrix}$

When Φr = 180°, the conditions should be set as follows:
(1) When 0.1 ≼ R ≼ 0.22,$\text{A = P + α, where α = -82·R + α1}$
(2) When 0.22 < R ≼ 0.42,$\begin{matrix}\begin{matrix}\text{A = P + α, where α = -82·R + α1, or} \\ \text{A = -P + β1}\end{matrix}\end{matrix}$
(3) When 0.42 < R ≼ 0.44,$\begin{matrix}\begin{matrix}\text{A = P + α, where α = - 137.5·R + α2, or} \\ \text{A = - P + β1}\end{matrix}\end{matrix}$
(4) When 0.44 < R ≼ 0.7,$\begin{matrix}\begin{matrix}\text{A = P + α, where α = -137.5·R + α2, or} \\ \text{A = P + α3}\end{matrix}\end{matrix}$
(5) When 0.7 < R ≼ 1.06,$\text{A = -P + β1}$
   However,$\begin{matrix}\begin{matrix}\text{-94° ≼ α1 ≼ -63° -70° ≼ α2 ≼ -40°} \\ \text{-95° ≼ α3 ≼ -65° 75° ≼ β1 ≼ 105°}\end{matrix}\end{matrix}$

By setting the conditions as shown here, a display element can be offered that is suited to implementation as both a transmission type element and a reflective type element.

As R increases above 1.06 µm, the value of L·Δn so increases that the Mauguin condition is satisfied and a display condition suitable for implementation as a transmission type element could not be achieved regardless of how the polarization axes were set. If R is made small, however, the S⁺ becomes an optically isotropic medium and the contrast ratio increases. However, if R is made too small, the ON transmittance becomes lower. Further, since the lower limit of the birefringence of the liquid crystal material is about 0.06, it is difficult to make R less than 0.10 in production. Therefore, the desirable range of R is 0.10 ≼ R ≼ 1.06.

Particularly in the range 0.18 ≼ R ≼ 0.30, an extremely high contrast ratio and an extremely high ON transmittance can be achieved at the same time by setting P and A as described above.

By appropriately setting the polarization axes of the polarizing plates and Φr, a display characteristic can be achieved that makes the element suitable for implementation in both a transmission type display device and a reflective type display device as long as 0.10 ≼ R ≼ 1.06, and if R > 1.06, a display characteristic can be achieved that makes the element suitable for implementation in a reflective type display device.

In the above examples, only cases were discussed in which the direction of the twist of the helical structure was clockwise when viewed in the Z axis direction, but if the twist is counterclockwise, then the angles of the polarization axes need only be measured in the counterclockwise direction.

### Eighth Example

Another example is shown here in which Φr = 180°. A cell was fabricated as shown in FIG. 2 by forming an ITO transparent electrode pattern and applying a polyimide alignment film on glass and disposing a substrate whose surface had undergone rubbing opposite this with a spacer between them to maintain the desired d. The differences from the first to the seventh examples are d/pₒ and the electrode configuration.

An optically active compound (E. Merck, S811) was added to a liquid crystal material (E. Merck, MJ90179, Δn = 0.167), which exhibits a nematic phase at room temperature, to adjust it to pₒ = 2.9 µm. S811 induces a helical structure with a left handed twist. The cell was configured with polyimide alignment films (Nihon Gosei Gomu K.K., AL3046) disposed on the upper and lower substrates and which had undergone rubbing in opposing parallel directions, and d = 1.7 µm. When the above liquid crystal material was infused, the pretilt angles on the upper and lower substrates became approximately 4° with opposing signs, and since ${\text{p}}_{\text{o}} {\text{/4 < d < 3p}}_{\text{o}} \text{/4}$, the initial alignment of the liquid crystal molecules was a 180° twisted state with a helical axis in the direction of the line normal to the substrate. This sample satisfies the condition ${\text{0.8 Φr/360° ≼ d/p}}_{\text{o}} \text{≼ 1.4 Φr/360°}$ because ${\text{d/p}}_{\text{o}} \text{= 0.586}$. The sample obtained as described above was sandwiched between two polarizing plates whose alignments were P = 50° and A = -50° and the voltage waveforms in FIG. 6 were applied to the electrodes. In FIG. 6, 201 is the scanning electrode waveform, 202 is the signal electrode waveform, 203 is a composite waveform of 201 and 202, and 204 is the electrooptical response of the cell. A metastable state with roughly a 360° twist is selected in selection period t₀₁, a metastable state with a 0° twist (referred to as uniform state) is selected in the next selection period t₁₁, and the first state is optically distinguished as a dark state. When driven with a waveform equivalent to a duty ratio of 1/400 where V1 = 28.0 V, V2 = 1.5 V and pulse duration ${\text{Pw = 350 µs (t}}_{\text{01}} {\text{= t}}_{\text{11}} {\text{= 700 µs, t}}_{\text{0}} {\text{= t}}_{\text{1}} \text{= 700 µs · 400)}$, the light transmittance level in the nonselection period (${\text{t}}_{\text{02}} {\text{= t}}_{\text{12}}$) was stable, the contrast ratio was 1:77, and the light transmittance in the bright state was approximately 60% (where the light transmittance in a similar optical system in which the two polarizing plates are disposed such that their polarization axes are parallel is 100%; same below).

### Ninth Example

As in the eighth example, an optically active compound was added to the liquid crystal composition (Chisso Sekiyu Kagaku, K.K., SS-4103, Δn = 0.154) to adjust pₒ to 3.04 µm. The cell was fabricated by rubbing polyimide alignment films (Nihon Gosei Gomu K.K., JALS-300) disposed on the upper and lower substrates in opposing parallel directions (180°) and making d = 1.65 µm. When the above liquid crystal material was infused, the pretilt angles on the upper and lower substrates became approximately 6° with opposing signs, and since ${\text{p}}_{\text{o}} {\text{/4 < d < 3p}}_{\text{o}} \text{/4}$, the initial alignment of the liquid crystal molecules was a 180° twisted state. ${\text{d/p}}_{\text{o}} \text{= 0.543}$. The sample obtained as described above was sandwiched between two polarizing plates whose alignments were P = 50° and A = -50° and the voltage waveforms in FIG. 6 were applied to the electrodes. When driven with a waveform equivalent to a duty ratio of 1/400 where V1 = 30.0 V, V2 = 1.8 V and pulse duration Pw = 300 µs in an optical arrangement similar to that in the eighth example, the light transmittance level in the nonselection period was stable as in the eighth example, the contrast ratio was 1:112, and the light transmittance in the bright state was approximately 70%.

### Tenth Example

As in the ninth example, pₒ was adjusted to 2.36 µm, d = 1.65 µm, ${\text{d/p}}_{\text{0}} \text{= 0.7}$, P = 50°, A = - 50° and the voltage waveforms in Fig. 6 were applied to the electrodes. When driven with a waveform equivalent to a duty ratio of 1/400 where V1 = 30.0 V, V2 = 1.8 V and pulse duration Pw = 300 µs in an optical arrangement similar to that in the eighth example, the light transmittance level in the nonselection period was stable as in the eighth example, the contrast ratio was 1:114, and the light transmittance in the bright state was approximately 70%.

### Eleventh Example

As in the ninth example, pₒ was adjusted to 4.13 µm, d = 1.65 µm, ${\text{d/p}}_{\text{o}} \text{= 0.4}$, P = 50°, A = - 50° and the voltage waveforms in Fig. 6 were applied to the electrodes. When driven with a waveform equivalent to a duty ratio of 1/400 where V1 = 30.0 V, V2 = 1.8 V and pulse duration Pw = 300 µs in an optical arrangement similar to that in the eighth example, the light transmittance level in the nonselection period was stable as in the eighth example, the contrast ratio was 1:110, and the light transmittance in the bright state was approximately 70%.

### Comparison Example 1

A sample was fabricated in which d = 1.8 µm and ${\text{p}}_{\text{o}} {\text{= 2.5 µm (d/p}}_{\text{o}} \text{= 0.72}$) and the other conditions were the same as in the eighth example. Since ${\text{p}}_{\text{o}} {\text{/4 < d < 3p}}_{\text{o}} \text{/4}$, the initial alignment of the liquid crystal molecules was a 180° twisted state, and though the 360° twisted state was maintained when a voltage waveform was applied, the stability of the uniform state was extremely low and relaxation from the uniform state to the initial state was observed in the nonselection period.

### Comparison Example 2

A sample was fabricated in which d = 1.8 µm and ${\text{p}}_{\text{o}} {\text{= 4.9 µm (d/p}}_{\text{o}} \text{= 0.37)}$ and the other conditions were the same as in the eighth example. Since ${\text{p}}_{\text{o}} {\text{/4 < d < 3p}}_{\text{o}} \text{/4}$, the initial alignment of the liquid crystal molecules was a 180° twisted state, and though the 0° uniform state was maintained when a voltage waveform was applied, the stability of the 360° twisted state was extremely low and relaxation from the 360° twisted state to the initial state was observed in the nonselection period.

### Comparison Example 3

A sample was fabricated in which the pretilt angle was made 26° by using an SiO oblique deposition film for the liquid crystal orientation layer. When the driving waveforms in FIG. 6 were applied to the cell in which d = 1.7 µm and the same liquid crystal material as used in the eighth example was infused, only the metastable state with uniform alignment appeared and could not be switched to a 360° twisted state.

By utilizing two metastable states which can be selected by applying voltage waveforms, a liquid crystal display device can be realized with a high contrast ratio and a wide effective viewing angle. Also, since the selected state in this device can be maintained over a sufficiently long period for practical application as a memory type display device, it can be applied to a simple matrix drive, high definition display with many scanning lines.

### Twelfth Example

The cell was fabricated by disposing substrates, on which ITO transparent electrode patterns were formed and polyimide alignment films were applied to the glass surface and whose surfaces had undergone rubbing, opposite each other with the desired d via spacers. A generalized cross section is shown in FIG. 2.

### Example 12-1

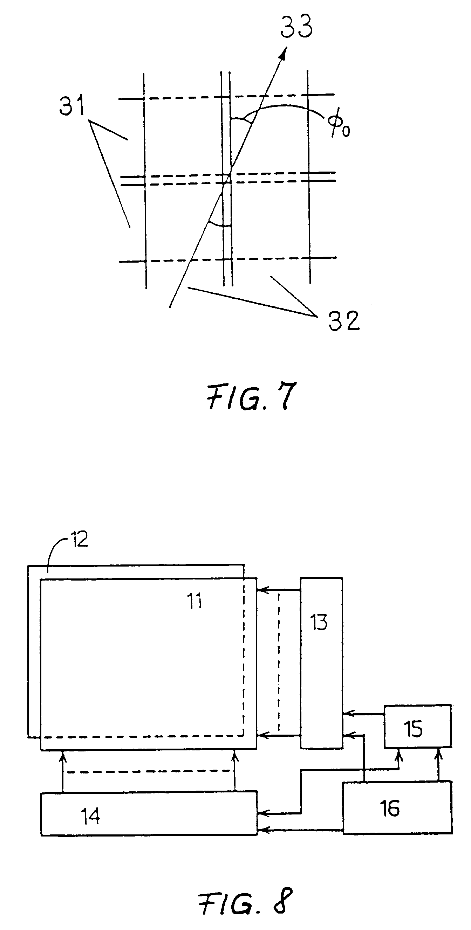

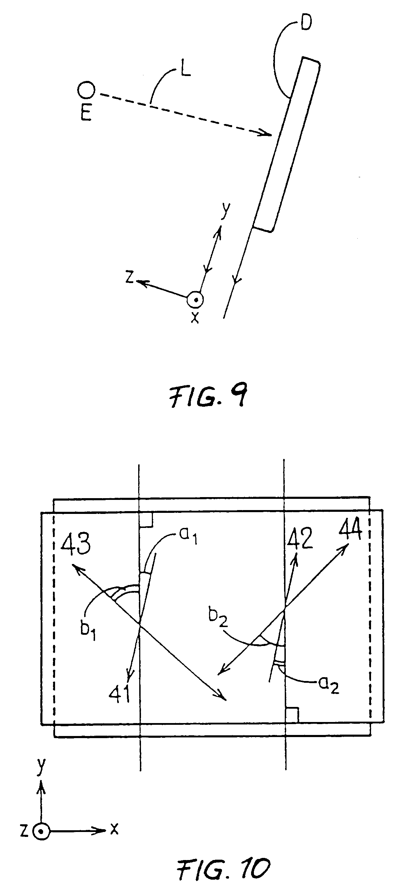

An optically active compound was added to a liquid crystal composition (E. Merck, ZLI-1557, Δn = 0.1147), which exhibits a nematic phase at room temperature, to adjust the pₒ to 3.5 µm. The cell was fabricated by rubbing the polyimide alignment film (Nihon Gosei Gomu K.K., AL3046) in rubbing direction 33 as shown in FIG. 7 and with d = 1.8 µm. Rubbing was performed on one substrate at a 45° angle (θₒ in FIG. 7 equals 45°) with respect to the sides of transparent electrodes 31, 32 and on the other substrate in a direction rotated 180° from this. When the above liquid crystal composition was infused, the pretilt angles on the upper and lower substrates became approximately 4° with opposing signs, and since ${\text{p}}_{\text{o}} {\text{/4 < d < 3p}}_{\text{o}} \text{/4}$, the initial alignment of the liquid crystal molecules was a 180° twisted state. The sample obtained as described above was sandwiched between two polarizing plates whose alignments were P = 50° and A = -50° and the voltage waveforms in FIG. 6 were applied to the electrodes as in the eighth example. The circuit configuration was generally that shown in FIG. 8, wherein 11 is the liquid crystal panel, 12 is the backlight used as the illumination means, 13 is the driving circuit (shift register/logic circuit) for applying a voltage on the scanning electrode group of the liquid crystal panel, 14 is the driving circuit (shift register/latch/logic circuit) for applying voltage to the signal electrode group, 15 is the reference signal generator, and 16 is the line-sequential scanning circuit (ROM/controller). As a result, a light transmittance level that is stable during the nonselection period (t₀₂, t₁₂), a contrast ratio of 1:77 and a light transmittance in the bright state of 63% could be uniformly achieved over all of the pixels.

### Example 12-2

When θₒ was made to equal 10° in example 12-1, similar display characteristics were obtained.

### Comparison Example 4

A cell was fabricated by making the rubbing direction on one substrate parallel to one side of the pixels (θₒ = 0° in FIG. 7) and leaving all the other conditions the same. Since ${\text{p}}_{\text{o}} {\text{/4 < d < 3p}}_{\text{o}} \text{/4}$, the initial alignment of the liquid crystal molecules was a 180° twisted state, but when the voltage waveform was applied to select the 360° twisted state, a domain of the uniform state appeared at the edge of the pixels.

### Thirteenth Example

Using an element (same as in twelfth example except for pₒ being adjusted to 3.2 µm) obtained by infusing the liquid crystal composition used in the twelfth example, we disposed the rubbing directions and polarization axes of the polarizing plates as shown below. FIG. 9 shows the relationship of the observer E to the liquid crystal display D and coordinate axes X, Y and Z used below. The liquid crystal display device D in the figure has its display surface in the x-y plane, and the observer E views the display surface along the line of sight L in the z axis direction. The vertical direction of the liquid crystal display device as viewed by the observer corresponds to the direction of the y axis in the figure. Using a similar coordinate system, FIG. 10 shows the disposition of the display surface, the rubbing directions and the polarizing axes. In the figure, 41 is the direction of rubbing on the lower substrate (side toward illumination device or reflective layer), 42 is the direction of rubbing on the upper substrate (side toward observer), α1 and α2 are the respective angles formed by rubbing directions 41, 42 and the y axis, and 43 and 44 are the polarization axes of the polarizing plates disposed on the lower substrate and the upper substrate, respectively, where polarization axis 43 forms angle β1 with the y axis and polarization axis 44 forms angle β2 with the y axis. By making$\begin{matrix}\begin{matrix}\text{α1 = α2 = 0°} \\ \text{β1 = 45°} \\ \text{β2 = 38°}\end{matrix}\end{matrix}$ in this example, the metastable state in which the twist angle of the liquid crystal is roughly (Φr + 180° = 360°) can be made the dark state and the state in which the twist angle is roughly (Φr - 180° = 0°) can be made the bright state.

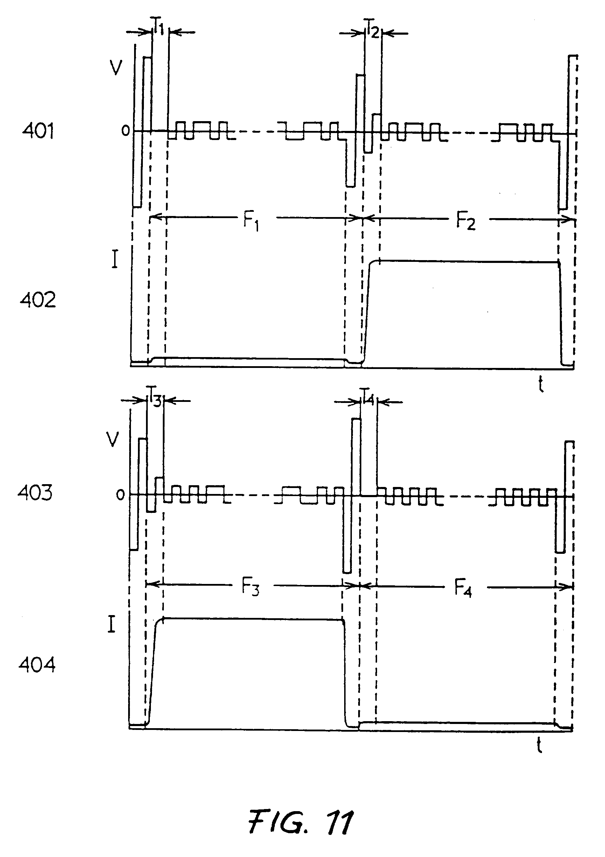

The voltage waveforms shown in FIG. 11 were applied to the electrodes of the element obtained as described above. In the same figure, 401 and 403 are composite waveforms of the scanning electrode waveform and the signal electrode waveform, and 402 and 404 are the electrooptical responses of the same element. The 360° twisted metastable state is selected in selection periods T₁ and T₄, and the 0° twisted metastable state is selected in T₂ and T₃, where the former is the dark state. When driven with a waveform (${\text{T}}_{\text{1}} {\text{= T}}_{\text{2}} {\text{= T}}_{\text{3}} {\text{= T}}_{\text{4}} \text{= 600 µs}$, ${\text{F}}_{\text{1}} {\text{= F}}_{\text{2}} {\text{= F}}_{\text{3}} {\text{= F}}_{\text{4}} \text{= 600 µs · 400}$) equivalent to a duty ratio of 1/400 where pulse duration Pw = 300 µs, a contrast ratio of 1:77 and a light transmittance in the bright state of approximately 63% were obtained. Also, when we moved the observer E to vary the angle formed by the line of sight L and the z axis using the arrangement in FIG. 9, we confirmed display with good readability in the area outside ± 60° to the left and right (x axis direction) and ±45° up and down (y axis direction).

In this example, a liquid crystal display device with a high contrast ratio and a wide effective viewing angle is realized by utilizing two metastable states. Also, since the selected state can be maintained over a sufficiently long period for practical application as a memory type display device, it can be applied to a simple matrix drive, high definition display with many scanning lines.

### Embodiment of the Invention

An example of a liquid crystal display device with a high contrast ratio and wide effective viewing angle is shown in which the light transmittance in the non-pixel area between adjacent picture elements is lower than the light transmittance in pixels when the liquid crystal electrooptical element of the invention is multiplex driven.

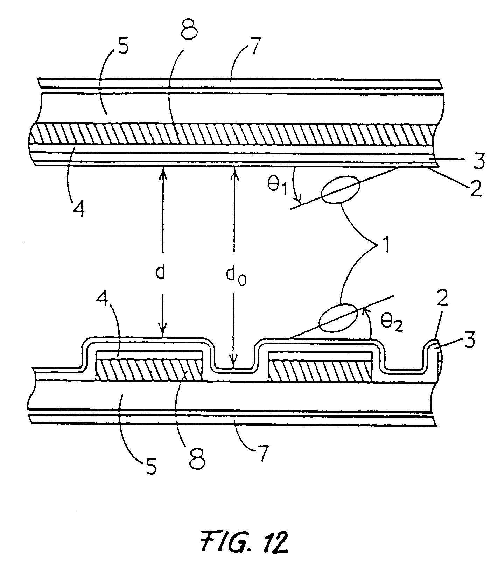

A photosensitive acrylic resin layer was formed on the glass substrate surface, and after exposure using a photomask, the resin was developed and baked to form a stripe pattern. An ITO transparent electrode was formed on the stripe pattern by a sputtering technique and then the alignment film was applied and rubbed to complete one substrate. For the other substrate, an ITO transparent electrode pattern was formed on the glass, an SiO₂ insulating film was formed on top of that and then an alignment film was applied and rubbed. These two substrates were mated together with a spacer between them to yield a cell with the structure shown in FIG. 12 (cross section). The numbers in the figure indicate the same members as in FIG. 2, and 8 is the resin layer, d is the thickness of the liquid crystal layer in the pixels, and dₒ is the thickness of the liquid crystal layer in the non-pixel area. The drive circuit configuration was that shown in FIG. 8.

An optically active compound was added to a liquid crystal composition (E. Merck, ZLI-1557, Δn = 0.1147), which exhibits a nematic phase at room temperature, to adjust it to pₒ = 3.2 µm. Polyimide (Nihon Gosei Gomu K.K., JALS-300) was used for the alignment films. d = 1.8 µm and dₒ = 2.50 µm. Rubbing was performed on one substrate in a direction that formed a 20° angle with the side of the pixels, and rubbing was performed on the other substrate in a direction rotated 180° from this (Φr = 180°). When the above liquid crystal composition was infused, the pretilt angles on the upper and lower substrates became approximately 14° with opposing signs, and since ${\text{p}}_{\text{o}} {\text{/4 < d < 3p}}_{\text{o}} \text{/4}$, the initial alignment of the liquid crystal molecules in the pixels was a 180° twisted state. When ${\text{d/p}}_{\text{o}} \text{≥ 0.75}$, the twist angle of the liquid crystal became$\text{Φr + 180n (n = 1, 2, 3, ...)}$ and since ${\text{d}}_{\text{o}} {\text{/p}}_{\text{o}} \text{> 0.75}$, the initial alignment in the non-pixel area was a 360° twisted state.

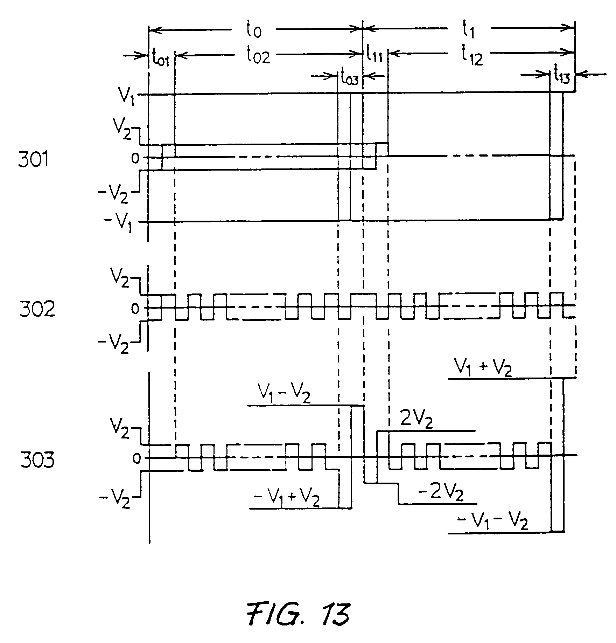

The voltage waveforms in FIG. 13 were applied to the electrodes of the element obtained as described above. In the figure, 301 is the scanning electrode waveform, 302 is the signal electrode waveform, and 303 is a composite waveform of 301 and 302 and is equivalent to the driving waveform applied to the liquid crystal layer. t₀ and t₁ are the frames in which the metastable states having twist angles of roughly (Φr + 180°) and (Φr - 180°) are selected, t₀₁ and t₁₁ are selection periods and t₀₂ and t₁₂ are nonselection periods. The optical response shown in FIG. 14 was obtained by disposing the polarizing plates such that P = 50° and A = -50°, whereby Φr + 180° = 360° was made the dark state and Φr - 180° = 0° was made the bright state. Since the twist angle in the non-pixel area is 360°, light in the non-pixel area is masked in the same arrangement. In FIG. 11, 401 and 403 are composite waveforms of the scanning electrode waveform and signal electrode waveform, and 402 and 404 represent the electrooptical response of the same element. The metastable state with roughly a 360° twist is selected in selection periods T₁, T₄, and the metastable state with roughly a 0° twist is selected in selection periods T₂, T₃. When driven with a waveform (${\text{T}}_{\text{1}} {\text{= T}}_{\text{2}} {\text{= T}}_{\text{3}} {\text{= T}}_{\text{4}} \text{= 500 µs}$, ${\text{F}}_{\text{1}} {\text{= F}}_{\text{2}} {\text{= F}}_{\text{3}} {\text{= F}}_{\text{4}} \text{= 500 µs · 400}$) equivalent to a duty ratio of 1/400 where V₁ = 30 V, V₂ = 1.0 V and pulse duration Pw = 250 µs, a contrast ratio of 1:102 and a light transmittance in the bright state of approximately 63% were obtained.

By making the twist state in the non-pixel area different from the twist state in pixels, the light transmittance in the non-pixel areas can be suppressed and the contrast ratio increased.

This invention is not only applicable to direct view liquid crystal display devices, but it is also applicable to light valves, spatial light modulators, electrophotographic printer heads, etc.

Employed as a liquid crystal display device, the present invention can also be applied to portable display devices, game machines and liquid crystal TV and color TV displays.

**Table 2**

| No. | P | A | I+ | I- | CR | T | R |
|---|---|---|---|---|---|---|---|
| 1 | 135 | 45 | 0̸.0̸8 | 18.18 | 232.40̸ | o | o |
| 2 | 50̸ | -40̸ | 0̸.0̸8 | 17.62 | 223.53 | o | o |
| 3 | 35 | -55 | 0̸.0̸8 | 16.0̸4 | 20̸4.23 | o | o |
| 4 | 155 | 65 | 0̸.0̸8 | 10̸.66 | 138.45 | o | o |
| 5 | 70̸ | -30̸ | 0̸.86 | 11.33 | 13.18 | o | o |
| 6 | 30̸ | -70̸ | 0̸.86 | 11.33 | 13.18 | o | o |
| 7 | 50̸ | -60̸ | 4.34 | 20̸.62 | 4.75 | * | o |
| 8 | 70̸ | -50̸ | 10̸.10̸ | 22.70̸ | 2.25 | * | o |
| 9 | 60̸ | -70̸ | 17.42 | 28.86 | 1.66 | * | o |
| 10̸ | 60̸ | 20̸ | 28.95 | 17.64 | 1.64 | * | o |
| 11 | 40̸ | 40̸ | 46.18 | 28.68 | 1.61 | * | o |
| 12 | 45 | 55 | 44.19 | 27.71 | 1.59 | * | o |
| 13 | 35 | 65 | 33.15 | 21.25 | 1.56 | * | o |
| 14 | 20̸ | 20̸ | 46.17 | 38.62 | 1.20̸ | * | * |
| 15 | 30̸ | 10̸ | 41.94 | 35.72 | 1.17 | * | * |
| 16 | 60̸ | 80̸ | 39.67 | 35.35 | 1.12 | * | * |
| 17 | 80̸ | -80̸ | 39.68 | 42.96 | 1.0̸8 | * | * |
| d = 1.7µm, L = 1.7µm, $\text{L·Δn = 0.102µm}$, λ = 0.38 to 0.78 µm | | | | | | | |

**Table 3**

| No. | P | A | I+ | I- | CR | T | R |
|---|---|---|---|---|---|---|---|
| 1 | 45 | -45 | 0̸.23 | 28.52 | 125.16 | o | o |
| 2 | 50̸ | -40̸ | 0̸.23 | 27.66 | 121.40̸ | o | o |
| 3 | 40̸ | -50̸ | 0̸.23 | 27.66 | 121.40̸ | o | o |
| 4 | 50̸ | -50̸ | 0̸.53 | 28.83 | 54.0̸2 | o | o |
| 5 | 50̸ | 50̸ | 45.91 | 18.80̸ | 2.44 | * | o |
| 6 | 55 | 55 | 45.91 | 21.28 | 2.16 | * | o |
| 7 | 30̸ | 20̸ | 45.60̸ | 29.29 | 1.56 | * | o |
| 8 | 60̸ | 70̸ | 43.48 | 28.94 | 1.50̸ | * | o |
| 9 | 60̸ | -80̸ | 24.0̸3 | 35.0̸7 | 1.46 | * | o |
| 10̸ | 40̸ | 10̸ | 37.26 | 25.78 | 1.45 | * | o |
| 11 | 60̸ | 80̸ | 38.60̸ | 32.14 | 1.20̸ | * | * |
| 12 | 20̸ | 10̸ | 45.60̸ | 38.83 | 1.17 | * | * |
| 13 | 80̸ | -80̸ | 38.60̸ | 44.0̸3 | 1.14 | * | * |
| 14 | 80̸ | 80̸ | 45.92 | 43.24 | 1.0̸6 | * | * |
| 15 | 0̸ | 20̸ | 38.59 | 40̸.35 | 1.0̸5 | * | * |
| 16 | 0̸ | 0̸ | 45.90̸ | 46.22 | 1.0̸1 | * | * |
| 17 | 90̸ | 80̸ | 45.63 | 45.46 | 1.0̸0̸ | * | * |
| d = 1.6µm, L = 1.6µm, $\text{L·Δn = 0.160µm}$, λ = 0.38 to 0.78µm | | | | | | | |

**Table 4**

| No. | P | A | I+ | I- | CR | T | R |
|---|---|---|---|---|---|---|---|
| 1 | 50̸ | -50̸ | 0̸.24 | 37.80̸ | 160̸.17 | o | o |
| 2 | 45 | -55 | 0̸.24 | 36.60̸ | 155.0̸8 | o | o |
| 3 | 55 | -45 | 0̸.24 | 36.60̸ | 155.0̸8 | o | o |
| 4 | 40̸ | -60̸ | 0̸.24 | 33.30̸ | 141.10̸ | o | o |
| 5 | 60̸ | -40̸ | 0̸.24 | 33.30̸ | 141.10̸ | o | o |
| 6 | 65 | -25 | 0̸.53 | 22.10̸ | 41.54 | o | o |
| 7 | 50̸ | 40̸ | 45.80̸ | 8.85 | 5.18 | * | o |
| 8 | 20̸ | 70̸ | 14.50̸ | 2.96 | 4.90̸ | * | o |
| 9 | 40̸ | 40̸ | 45.50̸ | 9.98 | 4.56 | * | o |
| 10̸ | 30̸ | 40̸ | 42.50̸ | 12.70̸ | 3.35 | * | o |
| 11 | 160̸ | 30̸ | 14.50̸ | 39.50̸ | 2.72 | * | o |
| 12 | 70̸ | 50̸ | 43.40̸ | 17.70̸ | 2.45 | * | o |
| 13 | 40̸ | -20̸ | 16.10̸ | 36.20̸ | 2.25 | * | o |
| 14 | 50̸ | -80̸ | 14.50̸ | 31.20̸ | 2.15 | * | o |
| 15 | 90̸ | 30̸ | 16.10̸ | 12.30̸ | 1.31 | * | * |
| 16 | 60̸ | 0̸ | 16.10̸ | 12.30̸ | 1.31 | * | * |
| 17 | 0̸ | 20̸ | 37.20̸ | 40̸.60̸ | 1.0̸9 | * | * |
| d = 2.0µm, L = 2.00µm, $\text{L·Δn = 0.200µm}$, λ = 0.38 to 0.78µm | | | | | | | |

**Table 5**

| No. | P | A | I+ | I- | CR | T | R |
|---|---|---|---|---|---|---|---|
| 1 | 50̸ | -50̸ | 0̸.13 | 42.49 | 332.60̸ | o | o |
| 2 | 60̸ | -40̸ | 0̸.13 | 37.51 | 293.87 | o | o |
| 3 | 40̸ | -60̸ | 0̸.13 | 37.51 | 293.87 | o | o |
| 4 | 30̸ | -70̸ | 0̸.13 | 24.91 | 195.49 | o | o |
| 5 | 80̸ | -20̸ | 0̸.13 | 10̸.62 | 83.33 | o | o |
| 6 | 130̸ | 40̸ | 0̸.78 | 41.23 | 52.54 | o | o |
| 7 | 35 | -75 | 2.34 | 25.18 | 10̸.76 | o | o |
| 8 | 50̸ | 40̸ | 47.91 | 5.67 | 8.45 | * | o |
| 9 | 50̸ | 50̸ | 47.22 | 6.89 | 6.85 | * | o |
| 10̸ | 160̸ | 40̸ | 7.25 | 38.32 | 5.28 | * | o |
| 11 | 30̸ | 40̸ | 43.85 | 10̸.0̸9 | 4.35 | * | o |
| 12 | 40̸ | -80̸ | 7.18 | 25.76 | 3.59 | * | o |
| 13 | 140̸ | 70̸ | 10̸.10̸ | 32.97 | 3.26 | * | o |
| 14 | 20̸ | -50̸ | 10̸.19 | 33.0̸1 | 3.24 | * | o |
| 15 | 0̸ | 20̸ | 38.11 | 42.0̸1 | 1.10̸ | * | * |
| 16 | 20̸ | 0̸ | 45.87 | 42.94 | 1.0̸7 | * | * |
| 17 | 90̸ | 80̸ | 47.75 | 46.72 | 1.0̸2 | * | * |
| d = 2.2µm, L = 2.20µm, $\text{L·Δn = 0.220µm}$, λ = 0.38 to 0.78µm | | | | | | | |

**Table 6**

| No. | P | A | I+ | I- | CR | T | R |
|---|---|---|---|---|---|---|---|
| 1 | 50̸ | -50̸ | 0̸.0̸6 | 42.66 | 658.13 | o | o |
| 2 | 45 | -55 | 0̸.0̸6 | 41.41 | 640̸.21 | o | o |
| 3 | 55 | -45 | 0̸.0̸6 | 41.41 | 640̸.21 | o | o |
| 4 | 40̸ | -60̸ | 0̸.0̸6 | 37.79 | 588.0̸1 | o | o |
| 5 | 60̸ | -40̸ | 0̸.0̸6 | 37.79 | 588.0̸1 | o | o |
| 6 | 30̸ | -70̸ | 0̸.0̸6 | 25.32 | 40̸2.85 | o | o |
| 7 | 40̸ | 50̸ | 42.68 | 2.46 | 17.37 | o | o |
| 8 | 30̸ | 50̸ | 36.52 | 3.40̸ | 10̸.75 | o | o |
| 9 | 60̸ | -60̸ | 6.28 | 42.92 | 6.84 | * | o |
| 10̸ | 40̸ | -30̸ | 10̸.53 | 42.17 | 4.0̸1 | * | o |
| 11 | 45 | -25 | 10̸.53 | 38.55 | 3.66 | * | o |
| 12 | 60̸ | -70̸ | 12.76 | 42.0̸1 | 3.29 | * | o |
| 13 | 20̸ | -40̸ | 18.0̸1 | 39.0̸1 | 2.17 | * | o |
| 14 | 80̸ | 80̸ | 46.59 | 40̸.37 | 1.15 | * | * |
| 15 | 20̸ | 0̸ | 45.52 | 40̸.53 | 1.12 | * | * |
| 16 | 0̸ | 20̸ | 36.49 | 39.84 | 1.0̸9 | * | * |
| 17 | 90̸ | 80̸ | 47.62 | 44.0̸7 | 1.0̸8 | * | * |
| d = 2.4µm, L = 2.40µm, $\text{L·Δn = 0.240µm}$, λ = 0.38 to 0.78µm | | | | | | | |

**Table 7**

| No. | P | A | I+ | I- | CR | T | R |
|---|---|---|---|---|---|---|---|
| 1 | 50̸ | -50̸ | 0̸.10̸ | 46.10̸ | 443.27 | o | o |
| 2 | 40̸ | -60̸ | 0̸.10̸ | 40̸.70̸ | 40̸2.97 | o | o |
| 3 | 60̸ | -40̸ | 0̸.10̸ | 40̸.70̸ | 40̸2.97 | o | o |
| 4 | 25 | -75 | 0̸.0̸9 | 19.10̸ | 218.54 | o | o |
| 5 | 75 | -25 | 0̸.0̸9 | 19.10̸ | 218.54 | o | o |
| 6 | 60̸ | 30̸ | 41.40̸ | 0̸.50̸ | 83.13 | o | o |
| 7 | 50̸ | 40̸ | 46.0̸0̸ | 0̸.62 | 74.55 | o | o |
| 8 | 80̸ | 20̸ | 20̸.40̸ | 1.66 | 12.29 | o | o |
| 9 | 160̸ | 30̸ | 10̸.50̸ | 44.90̸ | 4.28 | * | o |
| 10̸ | 60̸ | -70̸ | 10̸.60̸ | 44.90̸ | 4.24 | * | o |
| 11 | 65 | 55 | 46.0̸0̸ | 12.0̸0̸ | 3.83 | * | o |
| 12 | 40̸ | 20̸ | 45.0̸0̸ | 12.0̸0̸ | 3.75 | * | o |
| 13 | 40̸ | -30̸ | 12.70̸ | 44.80̸ | 3.53 | * | o |
| 14 | 140̸ | -20̸ | 33.40̸ | 12.0̸0̸ | 2.78 | * | o |
| 15 | 20̸ | -10̸ | 41.40̸ | 45.0̸0̸ | 1.0̸9 | * | * |
| 16 | 10̸ | 10̸ | 44.20̸ | 41.10̸ | 1.0̸8 | * | * |
| 17 | 90̸ | 80̸ | 46.0̸0̸ | 45.0̸0̸ | 1.0̸2 | * | * |
| d = 2.8µm, L = 2.80µm, $\text{L·Δn = 0.280µm}$, λ = 0.38 to 0.78µm | | | | | | | |

**Table 8**

| No. | P | A | I+ | I- | CR | T | R |
|---|---|---|---|---|---|---|---|
| 1 | 80̸ | 10̸ | 15.10̸ | 0̸.0̸7 | 220̸.12 | o | o |
| 2 | 50̸ | -50̸ | 0̸.49 | 43.90̸ | 89.78 | o | o |
| 3 | 60̸ | -50̸ | 0̸.53 | 43.10̸ | 81.78 | o | o |
| 4 | 40̸ | -60̸ | 0̸.48 | 38.90̸ | 81.38 | o | o |
| 5 | 160̸ | -70̸ | 30̸.90̸ | 0̸.59 | 52.46 | o | o |
| 6 | 75 | -25 | 0̸.44 | 18.50̸ | 42.53 | o | o |
| 7 | 70̸ | 10̸ | 23.0̸0̸ | 1.53 | 15.0̸3 | o | o |
| 8 | 120̸ | 40̸ | 8.34 | 38.20̸ | 4.58 | * | o |
| 9 | 85 | -45 | 8.43 | 27.60̸ | 3.27 | * | o |
| 10̸ | 40̸ | 10̸ | 43.0̸0̸ | 19.40̸ | 2.22 | * | o |
| 11 | 80̸ | 50̸ | 43.0̸0̸ | 19.40̸ | 2.22 | * | o |
| 12 | 50̸ | -20̸ | 15.20̸ | 32.40̸ | 2.13 | * | o |
| 13 | 0̸ | 10̸ | 38.0̸0̸ | 45.20̸ | 1.19 | * | * |
| 14 | 20̸ | 0̸ | 45.70̸ | 40̸.30̸ | 1.13 | * | * |
| 15 | 90̸ | -90̸ | 43.10̸ | 46.30̸ | 1.0̸7 | * | * |
| 16 | 10̸ | 10̸ | 43.10̸ | 41.20̸ | 1.0̸5 | * | * |
| 17 | 90̸ | 80̸ | 45.80̸ | 44.60̸ | 1.0̸3 | * | * |
| d = 3.2µm, L = 3.20µm, $\text{L·Δn = 0.320µm}$, λ = 0.38 to 0.78µm | | | | | | | |

**Table 9**

| No. | P | A | I+ | I- | CR | T | R |
|---|---|---|---|---|---|---|---|
| 1 | 55 | -55 | 0̸.36 | 39.37 | 10̸8.63 | o | o |
| 2 | 45 | -65 | 0̸.33 | 35.0̸6 | 10̸4.81 | o | o |
| 3 | 65 | -45 | 0̸.33 | 35.0̸6 | 10̸4.81 | o | o |
| 4 | 75 | -35 | 0̸.26 | 24.18 | 91.59 | o | o |
| 5 | 75 | 15 | 25.88 | 1.0̸2 | 25.45 | o | o |
| 6 | 70̸ | 10̸ | 25.88 | 2.11 | 12.26 | o | o |
| 7 | 80̸ | 20̸ | 25.89 | 2.12 | 12.20̸ | o | o |
| 8 | 40̸ | -40̸ | 10̸.77 | 36.57 | 3.40̸ | * | o |
| 9 | 50̸ | 10̸ | 39.92 | 12.91 | 3.0̸9 | * | o |
| 10̸ | 80̸ | 40̸ | 39.95 | 12.98 | 3.0̸8 | * | o |
| 11 | 40̸ | 20̸ | 46.0̸6 | 16.21 | 2.84 | * | o |
| 12 | 70̸ | -80̸ | 20̸.44 | 44.51 | 2.18 | * | o |
| 13 | 40̸ | -30̸ | 18.10̸ | 35.63 | 1.97 | * | o |
| 14 | 45 | -25 | 18.0̸9 | 32.46 | 1.79 | * | o |
| 15 | 10̸ | 0̸ | 45.26 | 43.68 | 1.0̸4 | * | * |
| 16 | 80̸ | 80̸ | 41.58 | 41.92 | 1.0̸1 | * | * |
| 17 | 20̸ | -20̸ | 40̸.10̸ | 40̸.19 | 1.0̸0̸ | * | * |
| d = 3.6µm, L = 3.60µm, $\text{L·Δn = 0.360µm}$, λ = 0.38 to 0.78µm | | | | | | | |

**Table 10**

| No. | P | A | I+ | I- | CR | T | R |
|---|---|---|---|---|---|---|---|
| 1 | 85 | 5 | 13.14 | 0̸.0̸2 | 70̸9.0̸1 | o | o |
| 2 | 55 | -55 | 0̸.70̸ | 31.83 | 45.49 | o | o |
| 3 | 60̸ | -60̸ | 1.51 | 34.68 | 22.90̸ | o | o |
| 4 | 80̸ | -40̸ | 1.31 | 23.40̸ | 17.92 | o | o |
| 5 | 70̸ | -70̸ | 10̸.76 | 40̸.68 | 3.78 | * | o |
| 6 | 75 | -75 | 18.0̸6 | 43.10̸ | 2.39 | * | o |
| 7 | 90̸ | 40̸ | 36.31 | 16.21 | 2.24 | * | o |
| 8 | 50̸ | 0̸ | 36.0̸0̸ | 16.49 | 2.18 | * | o |
| 9 | 60̸ | -90̸ | 17.92 | 36.37 | 2.0̸3 | * | o |
| 10̸ | 90̸ | -60̸ | 17.92 | 36.37 | 2.0̸3 | * | o |
| 11 | 40̸ | 10̸ | 44.99 | 23.0̸0̸ | 1.96 | * | o |
| 12 | 30̸ | -50̸ | 13.53 | 24.52 | 1.81 | * | o |
| 13 | 60̸ | 60̸ | 39.66 | 24.83 | 1.60̸ | * | o |
| 14 | 0̸ | 0̸ | 39.62 | 47.33 | 1.19 | * | * |
| 15 | 10̸ | -10̸ | 45.94 | 43.11 | 1.0̸7 | * | * |
| d = 4.0µm, L = 4.00µm, $\text{L·Δn = 0.400µm}$, λ = 0.38 to 0.78µm | | | | | | | |

**Table 11**

| No. | P | A | I+ | I- | CR | T | R |
|---|---|---|---|---|---|---|---|
| 1 | 175 | -85 | 0̸.0̸4 | 14.96 | 374.0̸0̸ | o | o |
| 2 | 55 | -65 | 31.59 | 1.35 | 23.40̸ | o | o |
| 3 | 170̸ | -80̸ | 1.0̸0̸ | 22.84 | 22.84 | o | o |
| 4 | 45 | -75 | 26.55 | 1.19 | 22.31 | o | o |
| 5 | 90̸ | -30̸ | 15.0̸7 | 0̸.83 | 18.16 | o | o |
| 6 | 5 | 65 | 12.0̸0̸ | 0̸.74 | 16.22 | o | o |
| 7 | 10̸5 | -15 | 10̸.0̸0̸ | 0̸.64 | 15.63 | o | o |
| 8 | 70̸ | -20̸ | 15.75 | 3.60̸ | 4.38 | * | o |
| 9 | 90̸ | -50̸ | 31.0̸2 | 9.22 | 3.36 | * | o |
| 10̸ | 150̸ | -35 | 24.30̸ | 44.20̸ | 1.82 | * | o |
| d = 3.0µm, L = 3.00µm, $\text{L·Δn = 0.420µm}$, λ = 0.38 to 0.78µm | | | | | | | |

**Table 12**

| No. | P | A | I+ | I- | CR | T | R |
|---|---|---|---|---|---|---|---|
| 1 | 175 | -85 | 0̸.0̸5 | 15.80̸ | 316.0̸0̸ | o | o |
| 2 | 55 | -65 | 30̸.51 | 1.34 | 22.77 | o | o |
| 3 | 50̸ | -70̸ | 28.70̸ | 1.27 | 22.60̸ | o | o |
| 4 | 90̸ | -30̸ | 15.48 | 0̸.73 | 21.21 | o | o |
| 5 | 10̸5 | -15 | 10̸.23 | 0̸.51 | 20̸.0̸6 | o | o |
| 6 | 10̸ | 70̸ | 10̸.0̸0̸ | 0̸.54 | 18.52 | o | o |
| 7 | 165 | -85 | 1.80̸ | 23.79 | 13.22 | o | o |
| 8 | 90̸ | -50̸ | 31.71 | 8.77 | 3.62 | * | o |
| 9 | 70̸ | -20̸ | 13.50̸ | 5.20̸ | 2.60̸ | * | o |
| 10̸ | 155 | -40̸ | 23.54 | 41.53 | 1.76 | * | o |
| d = 2.3µm, L = 2.30µm, $\text{L·Δn = 0.428µm}$, λ = 0.38 to 0.78µm | | | | | | | |

**Table 13**

| No. | P | A | I+ | I- | CR | T | R |
|---|---|---|---|---|---|---|---|
| 1 | 85 | 5 | 16.64 | 0̸.0̸5 | 315.58 | o | o |
| 2 | 10̸5 | -15 | 0̸.38 | 11.15 | 28.98 | o | o |
| 3 | 150̸ | 30̸ | 1.35 | 29.99 | 22.17 | o | o |
| 4 | 70̸ | -50̸ | 1.25 | 27.30̸ | 21.90̸ | o | o |
| 5 | 55 | -65 | 1.33 | 28.88 | 21.69 | o | o |
| 6 | 80̸ | 10̸ | 24.73 | 1.32 | 18.70̸ | o | o |
| 7 | 40̸ | -70̸ | 1.48 | 20̸.25 | 13.65 | o | o |
| 8 | 10̸0̸ | 30̸ | 25.20̸ | 8.97 | 2.81 | * | o |
| 9 | 75 | -75 | 15.66 | 43.46 | 2.77 | * | o |
| 10̸ | 50̸ | 10̸ | 44.68 | 18.0̸8 | 2.47 | * | o |
| 11 | 75 | 45 | 47.38 | 23.0̸0̸ | 2.0̸6 | * | o |
| 12 | 80̸ | 50̸ | 47.57 | 25.97 | 1.83 | * | o |
| 13 | 10̸ | -30̸ | 45.19 | 30̸.0̸0̸ | 1.51 | * | o |
| d = 4.4µm, L = 4.40µm, $\text{L·Δn = 0.440µm}$, λ = 0.38 to 0.78µm | | | | | | | |

**Table 14**

| No. | P | A | I+ | I- | CR | T | R |
|---|---|---|---|---|---|---|---|
| 1 | 175 | -85 | 0̸.0̸5 | 16.64 | 332.80̸ | o | o |
| 2 | 10̸0̸ | -20̸ | 11.73 | 0̸.41 | 28.61 | o | o |
| 3 | 150̸ | 30̸ | 29.43 | 1.36 | 21.64 | o | o |
| 4 | 165 | -85 | 1.89 | 24.74 | 13.0̸9 | o | o |
| 5 | 90̸ | -50̸ | 32.40̸ | 8.32 | 3.89 | * | o |
| 6 | 120̸ | -90̸ | 32.69 | 47.52 | 1.45 | * | o |
| 7 | 10̸0̸ | 50̸ | 22.40̸ | 31.0̸5 | 1.39 | * | o |
| 8 | 10̸ | 10̸ | 44.96 | 39.0̸0̸ | 1.15 | * | * |
| d = 3.0µm, L = 3.00µm, $\text{L·Δn = 0.450µm}$, λ = 0.38 to 0.78µm | | | | | | | |

**Table 15**

| No. | P | A | I+ | I- | CR | T | R |
|---|---|---|---|---|---|---|---|
| 1 | 85 | 5 | 25.0̸1 | 0̸.21 | 117.74 | o | o |
| 2 | 90̸ | 10̸ | 25.10̸ | 0̸.29 | 87.68 | o | o |
| 3 | 110̸ | -20̸ | 0̸.41 | 22.48 | 55.13 | o | o |
| 4 | 75 | -5 | 25.47 | 0̸.50̸ | 51.30̸ | o | o |
| 5 | 90̸ | -40̸ | 1.94 | 23.53 | 12.11 | o | o |
| 6 | 70̸ | -90̸ | 13.77 | 42.63 | 3.0̸9 | * | o |
| 7 | 85 | 35 | 41.0̸5 | 14.20̸ | 2.89 | * | o |
| 8 | 40̸ | -10̸ | 43.19 | 15.35 | 2.81 | * | o |
| 9 | 135 | 85 | 42.26 | 15.0̸4 | 2.81 | * | o |
| 10̸ | 10̸0̸ | 50̸ | 42.85 | 15.45 | 2.77 | * | o |
| 11 | 20̸ | -30̸ | 44.0̸3 | 15.88 | 2.77 | * | o |
| 12 | 120̸ | -50̸ | 17.62 | 42.85 | 2.43 | * | o |
| 13 | 140̸ | -30̸ | 17.66 | 42.76 | 2.42 | * | o |
| 14 | 140̸ | -50̸ | 30̸.99 | 39.52 | 1.28 | * | * |
| 15 | 120̸ | -70̸ | 32.44 | 40̸.63 | 1.25 | * | * |
| 16 | 160̸ | -30̸ | 32.61 | 40̸.44 | 1.24 | * | * |
| d = 4.0µm, L = 4.00µm, $\text{L·Δn = 0.560µm}$, λ = 0.38 to 0.78µm | | | | | | | |

**Table 16**

| No. | P | A | I+ | I- | CR | T | R |
|---|---|---|---|---|---|---|---|
| 1 | 85 | 5 | 29.95 | 0̸.24 | 124.72 | o | o |
| 2 | 80̸ | 0̸ | 30̸.27 | 0̸.57 | 53.28 | o | o |
| 3 | 90̸ | 10̸ | 30̸.0̸6 | 0.57 | 52.80̸ | o | o |
| 4 | 170̸ | 0̸ | 15.97 | 46.91 | 2.94 | * | o |
| 5 | 0̸ | -50̸ | 41.86 | 16.0̸7 | 2.60̸ | * | o |
| 6 | 40̸ | 40̸ | 15.37 | 35.56 | 2.31 | * | o |
| 7 | 10̸0̸ | 50̸ | 42.88 | 19.46 | 2.20̸ | * | o |
| 8 | 175 | -5 | 22.12 | 46.84 | 2.12 | * | o |
| 9 | 0̸ | 0̸ | 22.34 | 47.20̸ | 2.11 | * | o |
| 10̸ | 60̸ | 20̸ | 37.23 | 17.84 | 2.0̸9 | * | o |
| 11 | 10̸0̸ | -80̸ | 21.11 | 43.84 | 2.0̸8 | * | o |
| 12 | 80̸ | 80̸ | 21.11 | 43.84 | 2.0̸8 | * | o |
| 13 | 120̸ | 70̸ | 44.29 | 21.85 | 2.0̸3 | * | o |
| 14 | 40̸ | 0̸ | 41.63 | 24.18 | 1.72 | * | o |
| 15 | 20̸ | -20̸ | 44.78 | 28.91 | 1.55 | * | o |
| 16 | 60̸ | 50̸ | 22.42 | 33.91 | 1.51 | * | o |
| d = 6.4µm, L = 6.40µm, $\text{L·Δn = 0.640µm}$, λ = 0.38 to 0.78µm | | | | | | | |

**Table 17**

| No. | P | A | I+ | I- | CR | T | R |
|---|---|---|---|---|---|---|---|
| 1 | 175 | -85 | 0̸.23 | 32.52 | 141.39 | o | o |
| 2 | 0̸ | -90̸ | 0̸.22 | 27.42 | 124.64 | o | o |
| 3 | 170̸ | -90̸ | 0̸.83 | 32.85 | 39.58 | o | o |
| 4 | 85 | 15 | 2.53 | 36.34 | 14.36 | o | o |
| 5 | 95 | 15 | 2.54 | 33.71 | 13.27 | o | o |
| 6 | 130̸ | -20̸ | 25.35 | 1.99 | 12.74 | o | o |
| 7 | 20̸ | 60̸ | 19.46 | 1.91 | 10̸.19 | o | o |
| 8 | 90̸ | -85 | 43.50̸ | 12.31 | 3.53 | * | o |
| 9 | 10̸5 | 50̸ | 24.10̸ | 48.34 | 2.0̸1 | * | o |
| 10̸ | 150̸ | -50̸ | 23.75 | 23.71 | 1.0̸0̸ | * | * |
| d = 4.4µm, L = 4.40µm, $\text{L·Δn = 0.700µm}$, λ = 0.38 to 0.78µm | | | | | | | |

**Table 18**

| No. | P | A | I+ | I- | CR | T | R |
|---|---|---|---|---|---|---|---|
| 1 | 90̸ | 0̸ | 28.61 | 0̸.13 | 228.70̸ | o | o |
| 2 | 85 | 5 | 32.40̸ | 0̸.18 | 184.0̸9 | o | o |
| 3 | 80̸ | 0̸ | 32.87 | 1.0̸1 | 32.51 | o | o |
| 4 | 0̸ | 20̸ | 10̸.94 | 42.46 | 3.88 | * | o |
| 5 | 0̸ | 30̸ | 9.50̸ | 36.45 | 3.84 | * | o |
| 6 | 80̸ | -80̸ | 12.26 | 44.0̸5 | 3.59 | * | o |
| 7 | 175 | 5 | 14.19 | 47.0̸1 | 3.31 | * | o |
| 8 | 70̸ | -20̸ | 33.64 | 11.52 | 2.92 | * | o |
| 9 | 120̸ | -60̸ | 9.61 | 25.40̸ | 2.64 | * | o |
| 10̸ | 175 | -5 | 17.59 | 46.21 | 2.63 | * | o |
| 11 | 90̸ | -90̸ | 17.73 | 45.23 | 2.55 | * | o |
| 12 | 20̸ | -60̸ | 39.55 | 16.38 | 2.41 | * | o |
| 13 | 60̸ | -20̸ | 39.55 | 16.38 | 2.41 | * | o |
| 14 | 10̸0̸ | 40̸ | 40̸.17 | 19.46 | 2.0̸6 | * | o |
| 15 | 80̸ | 40̸ | 30̸.99 | 16.30̸ | 1.90̸ | * | o |
| 16 | 30̸ | -30̸ | 46.40̸ | 31.23 | 1.49 | * | o |
| 17 | 160̸ | 40̸ | 21.34 | 30̸.61 | 1.43 | * | o |
| d = 4.5µm, L = 4.50µm, $\text{L·Δn = 0.720µm}$, λ = 0.38 to 0.78µm | | | | | | | |

**Table 19**

| No. | P | A | I+ | I- | CR | T | R |
|---|---|---|---|---|---|---|---|
| 1 | 90̸ | 0̸ | 30̸.34 | 0̸.0̸6 | 516.13 | o | o |
| 2 | 85 | 5 | 31.83 | 0̸.11 | 289.63 | o | o |
| 3 | 95 | -5 | 27.22 | 0̸.53 | 51.82 | o | o |
| 4 | 90̸ | -80̸ | 15.90̸ | 46.79 | 2.94 | * | o |
| 5 | 85 | -85 | 16.34 | 47.98 | 2.94 | * | o |
| 6 | 5 | 25 | 12.96 | 37.63 | 2.90̸ | * | o |
| 7 | 60̸ | 0̸ | 33.10̸ | 11.51 | 2.88 | * | o |
| 8 | 0̸ | 0̸ | 17.80̸ | 48.19 | 2.71 | * | o |
| 9 | 80̸ | 80̸ | 16.11 | 43.40̸ | 2.69 | * | o |
| 10̸ | 20̸ | 0̸ | 23.65 | 42.13 | 1.78 | * | o |
| 11 | 110̸ | 30̸ | 40̸.31 | 23.22 | 1.74 | * | o |
| 12 | 25 | 5 | 21.69 | 36.85 | 1.70̸ | * | o |
| 13 | 65 | -65 | 27.25 | 43.64 | 1.60̸ | * | o |
| 14 | 10̸0̸ | 40̸ | 37.90̸ | 24.78 | 1.53 | * | o |
| 15 | 40̸ | -40̸ | 46.75 | 39.60̸ | 1.18 | * | * |
| 16 | 30̸ | -30̸ | 44.25 | 41.19 | 1.0̸7 | * | * |
| 17 | 50̸ | -50̸ | 42.13 | 39.99 | 1.0̸5 | * | * |
| d = 4.9µm, L = 4.90µm, $\text{L·Δn = 0.78µm}$, λ = 0.38 to 0.78µm | | | | | | | |

**Table 20**

| No. | P | A | I+ | I- | CR | T | R |
|---|---|---|---|---|---|---|---|
| 1 | 85 | 5 | 27.0̸5 | 0̸.0̸5 | 534.38 | o | o |
| 2 | 90̸ | 0̸ | 27.91 | 0̸.0̸8 | 359.67 | o | o |
| 3 | 80̸ | 10̸ | 24.74 | 0̸.33 | 75.31 | o | o |
| 4 | 95 | -5 | 27.20̸ | 0̸.41 | 66.98 | o | o |
| 5 | 80̸ | 20̸ | 21.82 | 2.13 | 10̸.26 | o | o |
| 6 | 0̸ | 0̸ | 18.31 | 46.63 | 2.55 | * | o |
| 7 | 5 | 5 | 17.82 | 45.37 | 2.55 | * | o |
| 8 | 175 | -5 | 17.82 | 45.37 | 2.55 | * | o |
| 9 | 5 | -5 | 18.92 | 46.29 | 2.45 | * | o |
| 10 | 160̸ | -30̸ | 9.41 | 21.84 | 2.32 | * | o |
| 11 | 90̸ | 30̸ | 25.56 | 11.24 | 2.28 | * | o |
| 12 | 60̸ | 0̸ | 25.0̸4 | 11.21 | 2.23 | * | o |
| 13 | 120̸ | 0̸ | 25.98 | 12.12 | 2.14 | * | o |
| 14 | 20̸ | 0̸ | 19.11 | 40̸.80̸ | 2.14 | * | o |
| 15 | 40̸ | -30̸ | 39.66 | 40̸.58 | 1.0̸2 | * | * |
| 16 | 40̸ | -40̸ | 42.34 | 41.57 | 1.0̸2 | * | * |
| 17 | 50̸ | -50̸ | 42.47 | 41.94 | 1.0̸1 | * | * |
| d = 5.3µm, L = 5.30µm, $\text{L·Δn = 0.84µ}$m, λ = 0.38 to 0.78µm | | | | | | | |

**Table 21**

| No. | P | A | I+ | I- | CR | T | R |
|---|---|---|---|---|---|---|---|
| 1 | 175 | -85 | 15.58 | 0̸.0̸7 | 238.44 | o | o |
| 2 | 90̸ | 0̸ | 19.55 | 0̸.30̸ | 66.13 | o | o |
| 3 | 95 | -5 | 22.94 | 1.67 | 13.75 | o | o |
| 4 | 10̸5 | 15 | 23.56 | 7.0̸1 | 3.36 | * | o |
| 5 | 40̸ | 10̸ | 9.82 | 23.41 | 2.38 | * | o |
| 6 | 30̸ | 20̸ | 13.36 | 28.60̸ | 2.14 | * | o |
| 7 | 0̸ | -30̸ | 15.38 | 32.68 | 2.12 | * | o |
| 8 | 90̸ | 70̸ | 18.77 | 39.58 | 2.11 | * | o |
| 9 | 20̸ | 0̸ | 18.71 | 39.33 | 2.10̸ | * | o |
| 10̸ | 20̸ | -10̸ | 19.0̸4 | 38.84 | 2.0̸4 | * | o |
| 11 | 20̸ | -20̸ | 19.84 | 36.42 | 1.84 | * | o |
| 12 | 60̸ | 60̸ | 14.22 | 25.72 | 1.81 | * | o |
| 13 | 10̸ | 10̸ | 24.48 | 42.89 | 1.75 | * | o |
| 14 | 5 | 5 | 25.92 | 45.33 | 1.75 | * | o |
| 15 | 0̸ | 0̸ | 26.42 | 46.18 | 1.75 | * | o |
| d = 4.6µm, L = 4.60µm, $\text{L·Δn = 0.96µm}$, λ = 0.38 to 0.78µm | | | | | | | |

**Table 22**

| No. | P | A | I+ | I- | CR | T | R |
|---|---|---|---|---|---|---|---|
| 1 | 85 | 5 | 10̸.32 | 0̸.12 | 84.47 | o | o |
| 2 | 90̸ | 0̸ | 14.79 | 0̸.42 | 35.60̸ | o | o |
| 3 | 85 | -5 | 15.22 | 0̸.92 | 16.52 | o | o |
| 4 | 80̸ | -30̸ | 29.77 | 13.19 | 2.26 | * | o |
| 5 | 60̸ | -20̸ | 18.64 | 9.92 | 1.88 | * | o |
| 6 | 40̸ | -60̸ | 32.0̸0̸ | 17.29 | 1.85 | * | o |
| 7 | 70̸ | -40̸ | 34.52 | 18.79 | 1.84 | * | o |
| 8 | 45 | -55 | 33.22 | 18.73 | 1.77 | * | o |
| 9 | 40̸ | -50̸ | 28.52 | 16.60̸ | 1.72 | * | o |
| 10̸ | 60̸ | -50̸ | 37.62 | 22.45 | 1.68 | * | o |
| 11 | 40̸ | -40̸ | 24.49 | 16.81 | 1.46 | * | o |
| 12 | 0̸ | 0̸ | 1.0̸0̸ | 1.0̸0̸ | 1.0̸0̸ | * | * |
| 13 | 40̸ | 0̸ | 1.0̸0̸ | 1.0̸0̸ | 1.0̸0̸ | * | * |
| 14 | 80̸ | -60̸ | 1.0̸0̸ | 1.0̸0̸ | 1.0̸0̸ | * | * |
| 15 | 60̸ | -80̸ | 1.0̸0̸ | 1.0̸0̸ | 1.0̸0̸ | * | * |
| 16 | 0̸ | 50̸ | 1.0̸0̸ | 1.0̸0̸ | 1.0̸0̸ | * | * |
| d = 6.4µm, L = 6.40µm, $\text{L·Δn = 1.02µm}$, λ = 0.38 to 0.78µm | | | | | | | |

**Table 23**

| No. | P | A | I+ | I- | CR | T | R |
|---|---|---|---|---|---|---|---|
| 1 | 90̸ | 0̸ | 11.93 | 0̸.45 | 26.78 | o | o |
| 2 | 85 | -5 | 12.31 | 0̸.82 | 14.98 | o | o |
| 3 | 5 | -85 | 12.31 | 0̸.82 | 14.98 | o | o |
| 4 | 20̸ | -70̸ | 17.0̸9 | 5.58 | 3.0̸6 | * | o |
| 5 | 80̸ | -30̸ | 26.97 | 12.17 | 2.22 | * | o |
| 6 | 60̸ | -30̸ | 21.29 | 9.75 | 2.18 | * | o |
| 7 | 35 | -75 | 29.13 | 14.32 | 2.0̸3 | * | o |
| 8 | 60̸ | -40̸ | 27.82 | 13.79 | 2.0̸2 | * | o |
| 9 | 50̸ | -50̸ | 29.27 | 15.24 | 1.92 | * | o |
| 10̸ | 60̸ | -50̸ | 33.88 | 19.0̸6 | 1.78 | * | o |
| 11 | 40̸ | -40̸ | 20̸.23 | 12.55 | 1.61 | * | o |
| 12 | 40̸ | -20̸ | 14.38 | 16.67 | 1.16 | * | * |
| 13 | 20̸ | 0̸ | 1.0̸0̸ | 1.0̸0̸ | 1.0̸0̸ | * | * |
| 14 | 60̸ | -80̸ | 1.0̸0̸ | 1.0̸0̸ | 1.0̸0̸ | * | * |
| 15 | 80̸ | -60̸ | 1.0̸0̸ | 1.0̸0̸ | 1.0̸0̸ | * | * |
| 16 | 20̸ | -20̸ | 1.0̸0̸ | 1.0̸0̸ | 1.0̸0̸ | * | * |
| 17 | 60̸ | 60̸ | 1.0̸0̸ | 1.0̸0̸ | 1.0̸0̸ | * | * |
| d = 6.6µm, L = 6.60µm, $\text{L·Δn = 1.05µm}$, λ = 0.38 to 0.78µm | | | | | | | |

**Table 24**

| No. | P | A | I+ | I- | CR | T | R |
|---|---|---|---|---|---|---|---|
| 1 | 0̸ | -90̸ | 0̸.45 | 11.93 | 26.51 | o | o |
| 2 | 85 | -5 | 0̸.82 | 12.31 | 15.0̸1 | o | o |
| 3 | 95 | 5 | 0̸.82 | 12.31 | 15.0̸1 | o | o |
| 4 | 0̸ | 65 | 8.53 | 21.50̸ | 2.52 | * | o |
| 5 | 130̸ | 70̸ | 16.67 | 14.38 | 1.16 | * | * |
| 6 | 70̸ | 70̸ | 1.0̸0̸ | 1.0̸0̸ | 1.0̸0̸ | * | * |
| d = 5.1µm, L = 5.10µm, $\text{L·Δn = 1.06µm}$, λ = 0.38 to 0.78µm | | | | | | | |

**Table 25**

| No. | P | A | I+ | I- | CR | T | R |
|---|---|---|---|---|---|---|---|
| 1 | 85 | -15 | 14.86 | 4.0̸0̸ | 3.72 | * | o |
| 2 | 20̸ | -80̸ | 16.31 | 5.24 | 3.11 | * | o |
| 3 | 80̸ | -20̸ | 16.31 | 5.24 | 3.11 | * | o |
| 4 | 25 | -85 | 21.47 | 9.60̸ | 2.24 | * | o |
| 5 | 85 | -25 | 21.47 | 9.60̸ | 2.24 | * | o |
| 6 | 65 | -35 | 21.78 | 9.95 | 2.19 | * | o |
| 7 | 30̸ | -80̸ | 23.27 | 11.14 | 2.0̸9 | * | o |
| 8 | 80̸ | -30̸ | 23.27 | 11.14 | 2.0̸9 | * | o |
| 9 | 40̸ | -60̸ | 23.24 | 11.21 | 2.0̸7 | * | o |
| 10 | 60̸ | -40̸ | 23.24 | 11.21 | 2.0̸7 | * | o |
| 11 | 45 | -55 | 24.20̸ | 12.0̸4 | 2.0̸1 | * | o |
| 12 | 55 | -45 | 24.20̸ | 12.0̸4 | 2.0̸1 | * | o |
| 13 | 40̸ | -70̸ | 26.99 | 14.34 | 1.88 | * | o |
| 14 | 40̸ | 50̸ | 30̸.51 | 36.80̸ | 1.21 | * | * |
| 15 | 30̸ | 50̸ | 32.69 | 35.12 | 1.0̸7 | * | * |
| 16 | 40̸ | 60̸ | 32.90̸ | 35.18 | 1.0̸7 | * | * |
| 17 | 20̸ | 40̸ | 34.77 | 37.0̸7 | 1.0̸7 | * | * |
| d = 5.8µm, L = 5.80µm, $\text{L·Δn = 1.08µm}$, λ = 0.38 to 0.78µm | | | | | | | |

**Table 26**

| No. | P | A | I+ | I- | CR | T | R |
|---|---|---|---|---|---|---|---|
| 1 | 70̸ | -30̸ | 16.34 | 7.77 | 2.10̸ | * | o |
| 2 | 60̸ | -40̸ | 19.0̸0̸ | 10̸.20̸ | 1.86 | * | o |
| 3 | 60̸ | -50̸ | 25.11 | 15.42 | 1.63 | * | o |
| 4 | 50̸ | -60̸ | 25.11 | 15.42 | 1.63 | * | o |
| 5 | 50̸ | 20̸ | 17.0̸7 | 25.88 | 1.52 | * | o |
| 6 | 50̸ | -70̸ | 29.97 | 20̸.61 | 1.45 | * | o |
| 7 | 90̸ | 50̸ | 16.0̸2 | 23.28 | 1.45 | * | o |
| 8 | 40̸ | 10̸ | 19.54 | 28.25 | 1.45 | * | o |
| 9 | 55 | -65 | 30̸.76 | 21.34 | 1.44 | * | o |
| 10̸ | 60̸ | -60̸ | 31.0̸4 | 21.59 | 1.44 | * | o |
| 11 | 80̸ | 50̸ | 19.80̸ | 28.44 | 1.44 | * | o |
| 12 | 55 | 35 | 21.72 | 30̸.84 | 1.42 | * | o |
| 13 | 50̸ | 30̸ | 21.93 | 31.0̸6 | 1.42 | * | o |
| 14 | 0̸ | 40̸ | 35.72 | 31.0̸0̸ | 1.15 | * | * |
| 15 | 40̸ | -30̸ | 11.39 | 10̸.0̸8 | 1.13 | * | * |
| 16 | 30̸ | 60̸ | 34.0̸0̸ | 31.96 | 1.0̸6 | * | * |
| 17 | 40̸ | 60̸ | 35.35 | 36.32 | 1.0̸3 | * | * |
| d = 5.4µm, L = 5.40µm, $\text{L·Δn = 1.12µm}$, λ = 0.38 to 0.78µm | | | | | | | |

**Table 27**

| No. | P | A | I+ | I- | CR | T | R |
|---|---|---|---|---|---|---|---|
| 1 | 20̸ | 70̸ | 18.50̸ | 8.20̸ | 2.26 | * | o |
| 2 | 120̸ | -30̸ | 27.60̸ | 14.90̸ | 1.85 | * | o |
| 3 | 140̸ | -40̸ | 32.60̸ | 20̸.70̸ | 1.57 | * | o |
| 4 | 60̸ | -40̸ | 16.0̸0̸ | 25.10̸ | 1.57 | * | o |
| 5 | 40̸ | -60̸ | 16.0̸0̸ | 25.10̸ | 1.57 | * | o |
| 6 | 110̸ | 60̸ | 24.10̸ | 35.30̸ | 1.46 | * | o |
| 7 | 90̸ | -90̸ | 43.60̸ | 48.0̸0̸ | 1.10̸ | * | * |
| 8 | 110̸ | -70̸ | 38.90̸ | 36.40̸ | 1.0̸7 | * | * |
| 9 | 170̸ | -80̸ | 5.80̸ | 2.30̸ | 2.52 | * | * |
| 10̸ | 80̸ | -20̸ | 8.80̸ | 7.50̸ | 1.17 | * | * |
| d = 19.0µm, L = 19.00µm, $\text{L·Δn = 1.900µm}$, λ = 0.38 to 0.78µm | | | | | | | |

**Table 28**

| No. | P | A | I+ | I- | CR | T | R |
|---|---|---|---|---|---|---|---|
| 1 | 110̸ | -15 | 12.80̸ | 7.30̸ | 1.75 | * | o |
| 2 | 10̸5 | -20̸ | 12.70̸ | 7.30̸ | 1.74 | * | o |
| 3 | 20̸ | 70̸ | 14.60̸ | 9.0̸0̸ | 1.62 | * | o |
| 4 | 115 | -20̸ | 16.70̸ | 11.10̸ | 1.50̸ | * | o |
| 5 | 110̸ | -25 | 16.60̸ | 11.10̸ | 1.50̸ | * | o |
| 6 | 120̸ | -30̸ | 21.90̸ | 16.30̸ | 1.34 | * | o |
| 7 | 140̸ | -40̸ | 26.90̸ | 22.50̸ | 1.20̸ | * | * |
| 8 | 110̸ | 60̸ | 29.0̸0̸ | 34.20̸ | 1.18 | * | * |
| 9 | 60̸ | -40̸ | 20̸.50̸ | 23.50̸ | 1.15 | * | * |
| 10 | 90̸ | -90̸ | 43.80̸ | 47.90̸ | 1.0̸9 | * | * |
| 11 | 130̸ | -90̸ | 26.0̸0̸ | 28.10̸ | 1.0̸8 | * | * |
| 12 | 160̸ | 20̸ | 36.60̸ | 38.40̸ | 1.0̸5 | * | * |
| 13 | 170̸ | -30̸ | 33.20̸ | 34.30̸ | 1.0̸3 | * | * |
| 14 | 90̸ | -50̸ | 28.60̸ | 28.10̸ | 1.0̸2 | * | * |
| 15 | 0̸ | -90̸ | 3.90̸ | 0̸.0̸0̸ | 975.0̸0̸ | * | * |
| 16 | 170̸ | -80̸ | 5.50̸ | 2.50̸ | 2.20̸ | * | * |
| 17 | 80̸ | -20̸ | 9.40̸ | 7.10̸ | 1.32 | * | o |
| d = 25.0µm, L = 25.00µm, $\text{L·Δn = 2.500µm}$, λ = 0.38 to 0.78µm | | | | | | | |

**Table 29**

| No. | P | A | I+ | I- | CR | T | R |
|---|---|---|---|---|---|---|---|
| 1 | 130̸ | 60̸ | 10̸.0̸0̸ | 0̸.50̸ | 20̸.0̸0̸ | o | o |
| 2 | 10̸ | -90̸ | 2.50̸ | 22.10̸ | 8.84 | * | o |
| 3 | 10̸0̸ | 0̸ | 2.50̸ | 21.90̸ | 8.76 | * | o |
| 4 | 110̸ | -10̸ | 8.90̸ | 33.70̸ | 3.79 | * | o |
| 5 | 170̸ | 40̸ | 13.40̸ | 30̸.80̸ | 2.30̸ | * | o |
| 6 | 60̸ | -70̸ | 12.90̸ | 28.0̸0̸ | 2.17 | * | o |
| 7 | 80̸ | 0̸ | 6.70̸ | 13.60̸ | 2.0̸3 | * | o |
| 8 | 90̸ | -45 | 17.80̸ | 35.90̸ | 2.0̸2 | * | o |
| 9 | 130̸ | -80̸ | 40̸.40̸ | 20̸.50̸ | 1.97 | * | o |
| 10̸ | 160̸ | -60̸ | 35.0̸0̸ | 19.60̸ | 1.79 | * | o |
| 11 | 150̸ | -20̸ | 42.60̸ | 40̸.80̸ | 1.0̸4 | * | * |
| 12 | 120̸ | -50̸ | 43.40̸ | 44.30̸ | 1.0̸2 | * | * |
| 13 | 50̸ | -40̸ | 0̸.90̸ | 5.50̸ | 6.11 | * | * |
| 14 | 50̸ | -30̸ | 4.60̸ | 3.10̸ | 1.48 | * | * |
| d = 2.0µm, L = 2.67µm, $\text{L·Δn = 0.267µm}$, λ = 0.38 to 0.78µm | | | | | | | |

**Table 30**

| No. | P | A | I+ | I- | CR | T | R |
|---|---|---|---|---|---|---|---|
| 1 | 50̸ | -50̸ | 0̸.50̸ | 20̸.90̸ | 41.80̸ | o | o |
| 2 | 110̸ | 60̸ | 29.40̸ | 0̸.80̸ | 36.75 | o | o |
| 3 | 40̸ | -60̸ | 1.0̸0̸ | 22.50̸ | 22.50̸ | o | o |
| 4 | 10̸0̸ | -10̸ | 4.70̸ | 39.70̸ | 8.45 | * | o |
| 5 | 20̸ | -40̸ | 22.50̸ | 3.30̸ | 6.82 | * | o |
| 6 | 20̸ | 70̸ | 11.70̸ | 46.80̸ | 4.0̸0̸ | * | o |
| 7 | 90̸ | 0̸ | 7.50̸ | 28.70̸ | 3.83 | * | o |
| 8 | 90̸ | -90̸ | 40̸.0̸0̸ | 18.80̸ | 2.13 | * | o |
| 9 | 140̸ | 70̸ | 15.70̸ | 8.30̸ | 1.89 | * | o |
| 10̸ | 70̸ | -10̸ | 11.30̸ | 19.80̸ | 1.75 | * | o |
| 11 | 160̸ | -20̸ | 41.90̸ | 24.30̸ | 1.72 | * | o |
| 12 | 140̸ | -40̸ | 44.40̸ | 31.70̸ | 1.40̸ | * | o |
| 13 | 10̸0̸ | -70̸ | 36.20̸ | 27.60̸ | 1.31 | * | * |
| 14 | 170̸ | -80̸ | 19.0̸0̸ | 18.50̸ | 1.0̸3 | * | * |
| d = 2.8µm, L = 3.73µm, $\text{L·Δn = 0.373µm}$, λ = 0.38 to 0.78µm | | | | | | | |

**Table 31**

| No. | P | A | I+ | I- | CR | T | R |
|---|---|---|---|---|---|---|---|
| 1 | 110̸ | -10̸ | 6.40̸ | 45.90̸ | 7.17 | * | o |
| 2 | 60̸ | -70̸ | 5.10̸ | 35.40̸ | 6.94 | * | o |
| 3 | 170̸ | 40̸ | 6.20̸ | 38.10̸ | 6.15 | * | o |
| 4 | 10̸ | -90̸ | 6.40̸ | 39.0̸0̸ | 6.0̸9 | * | o |
| 5 | 10̸0̸ | 0̸ | 6.50̸ | 38.90̸ | 5.98 | * | o |
| 6 | 130̸ | -80̸ | 44.0̸0̸ | 8.20̸ | 5.37 | * | o |
| 7 | 90̸ | -45 | 10̸.20̸ | 40̸.60̸ | 3.98 | * | o |
| 8 | 160̸ | -60̸ | 42.40̸ | 12.10̸ | 3.50̸ | * | o |
| 9 | 140̸ | -50̸ | 46.20̸ | 20̸.20̸ | 2.29 | * | o |
| 10̸ | 110̸ | -70̸ | 39.40̸ | 18.70̸ | 2.11 | * | o |
| 11 | 130̸ | 60̸ | 17.70̸ | 10̸.20̸ | 1.74 | * | o |
| 12 | 80̸ | 0̸ | 15.80̸ | 27.40̸ | 1.73 | * | o |
| 13 | 20̸ | -50̸ | 18.90̸ | 12.90̸ | 1.47 | * | o |
| 14 | 150̸ | -20̸ | 34.70̸ | 26.80̸ | 1.29 | * | * |
| d = 2.0µm, L = 2.67µm, $\text{L·Δn = 0.424µm}$, λ = 0.38 to 0.78µm | | | | | | | |

**Table 32**

| No. | P | A | I+ | I- | CR | T | R |
|---|---|---|---|---|---|---|---|
| 1 | 90̸ | -90̸ | 11.60̸ | 0̸.40̸ | 29.0̸0̸ | o | o |
| 2 | 160̸ | -20̸ | 13.60̸ | 2.0̸0̸ | 6.80̸ | * | o |
| 3 | 120̸ | -70̸ | 21.30̸ | 4.50̸ | 4.73 | * | o |
| 4 | 140̸ | -40̸ | 16.30̸ | 4.20̸ | 3.88 | * | o |
| 5 | 80̸ | -50̸ | 6.50̸ | 25.20̸ | 3.88 | * | o |
| 6 | 20̸ | 70̸ | 10̸.0̸0̸ | 28.10̸ | 2.81 | * | o |
| 7 | 10̸0̸ | -10̸ | 22.30̸ | 41.50̸ | 1.86 | * | o |
| 8 | 160̸ | -60̸ | 42.60̸ | 23.50̸ | 1.81 | * | o |
| 9 | 40̸ | -60̸ | 25.10̸ | 42.10̸ | 1.68 | * | o |
| 10̸ | 110̸ | 60̸ | 41.40̸ | 27.30̸ | 1.52 | * | o |
| 11 | 90̸ | 0̸ | 36.30̸ | 47.40̸ | 1.31 | * | * |
| 12 | 70̸ | -10̸ | 40̸.70̸ | 45.70̸ | 1.12 | * | * |
| 13 | 170̸ | -80̸ | 45.70̸ | 43.40̸ | 1.0̸5 | * | * |
| 14 | 140̸ | 70̸ | 42.10̸ | 40̸.40̸ | 1.0̸4 | * | * |
| d = 4.0µm, L = 5.33µm, $\text{L·Δn = 0.747µm}$, λ = 0.38 to 0.78µm | | | | | | | |

**Table 33**

| No. | P | A | I+ | I- | CR | T | R |
|---|---|---|---|---|---|---|---|
| 1 | 60̸ | -60̸ | 36.70̸ | 4.30̸ | 8.53 | * | o |
| 2 | 140̸ | -50̸ | 5.90̸ | 43.40̸ | 7.36 | * | o |
| 3 | 130̸ | 60̸ | 28.80̸ | 5.40̸ | 5.33 | * | o |
| 4 | 130̸ | -80̸ | 6.80̸ | 27.0̸0̸ | 3.97 | * | o |
| 5 | 160̸ | -60̸ | 13.0̸0̸ | 42.40̸ | 3.26 | * | o |
| 6 | 150̸ | -20̸ | 10̸.80̸ | 27.0̸0̸ | 2.50̸ | * | o |
| 7 | 170̸ | 40̸ | 35.20̸ | 14.20̸ | 2.48 | * | o |
| 8 | 20̸ | -60̸ | 36.40̸ | 20̸.80̸ | 1.75 | * | o |
| 9 | 90̸ | -45 | 33.40̸ | 24.10̸ | 1.39 | * | o |
| 10̸ | 50̸ | -10̸ | 23.80̸ | 20̸.80̸ | 1.14 | * | * |
| 11 | 80̸ | 0̸ | 39.0̸0̸ | 43.40̸ | 1.11 | * | * |
| 12 | 10̸ | -90̸ | 45.50̸ | 43.20̸ | 1.0̸5 | * | * |
| 13 | 10̸0̸ | 0̸ | 45.60̸ | 43.40̸ | 1.0̸5 | * | * |
| 14 | 110̸ | -10̸ | 43.0̸0̸ | 43.30̸ | 1.0̸1 | * | * |
| d = 6.0µm, L = 8.00µm, $\text{L·Δn = 1.120µm}$, λ = 0.38 to 0.78µm | | | | | | | |

**Table 34**

| No. | P | A | I+ | I- | CR | T | R |
|---|---|---|---|---|---|---|---|
| 1 | 10̸0̸ | 0̸ | 0̸.20̸ | 11.10̸ | 55.50̸ | o | o |
| 2 | 20̸ | -70̸ | 0̸.70̸ | 28.30̸ | 40̸.43 | o | o |
| 3 | 60̸ | 0̸ | 16.80̸ | 1.90̸ | 8.84 | * | o |
| 4 | 130̸ | -80̸ | 40̸.10̸ | 10̸.0̸0̸ | 4.0̸1 | * | o |
| 5 | 60̸ | -70̸ | 14.60̸ | 43.30̸ | 2.97 | * | o |
| 6 | 160̸ | -60̸ | 33.10̸ | 12.80̸ | 2.59 | * | o |
| 7 | 110̸ | -30̸ | 22.60̸ | 10̸.20̸ | 2.22 | * | o |
| 8 | 10̸0̸ | -45 | 26.80̸ | 12.30̸ | 2.18 | * | o |
| 9 | 170̸ | 40̸ | 14.60̸ | 22.50̸ | 1.54 | * | o |
| 10̸ | 150̸ | -20̸ | 43.90̸ | 38.30̸ | 1.15 | * | * |
| 11 | 160̸ | -90̸ | 9.50̸ | 0̸.20̸ | 47.50̸ | * | O |
| d = 2.0µm, L = 2.12µm, $\text{L·Δn = 0.212µm}$, λ = 0.38 to 0.78µm | | | | | | | |

**Table 35**

| No. | P | A | I+ | I- | CR | T | R |
|---|---|---|---|---|---|---|---|
| 1 | 40̸ | -60̸ | 0̸.20̸ | 47.30̸ | 236.50̸ | o | o |
| 2 | 20̸ | -80̸ | 0̸.70̸ | 28.80̸ | 41.14 | o | o |
| 3 | 60̸ | -40̸ | 0̸.70̸ | 28.80̸ | 41.14 | o | o |
| 4 | 170̸ | -80̸ | 13.60̸ | 7.10̸ | 1.92 | * | o |
| 5 | 110̸ | 60̸ | 29.70̸ | 45.0̸0̸ | 1.52 | * | o |
| 6 | 140̸ | 70̸ | 13.60̸ | 20̸.50̸ | 1.51 | * | o |
| 7 | 160̸ | -20̸ | 45.30̸ | 40̸.10̸ | 1.13 | * | * |
| 8 | 90̸ | -90̸ | 45.20̸ | 40̸.70̸ | 1.11 | * | * |
| d = 2.8µm, L = 2.96µm, $\text{L·Δn = 0.296µm}$, λ = 0.38 to 0.78µm | | | | | | | |

**Table 36**

| No. | P | A | I+ | I- | CR | T | R |
|---|---|---|---|---|---|---|---|
| 1 | 40̸ | -60̸ | 0̸.60̸ | 45.40̸ | 75.67 | o | o |
| 2 | 10̸0̸ | 0̸ | 0̸.60̸ | 13.20̸ | 22.0̸0̸ | o | o |
| 3 | 10̸ | -90̸ | 0̸.60̸ | 13.20̸ | 22.0̸0̸ | o | o |
| 4 | 130̸ | -80̸ | 44.40̸ | 9.10̸ | 4.88 | * | o |
| 5 | 130̸ | 60̸ | 16.20̸ | 36.60̸ | 2.26 | * | o |
| 6 | 170̸ | 40̸ | 8.10̸ | 18.30̸ | 2.26 | * | o |
| 7 | 90̸ | -45 | 11.30̸ | 8.20̸ | 1.38 | * | o |
| 8 | 150̸ | -20̸ | 38.40̸ | 33.10̸ | 1.16 | * | * |
| 9 | 20̸ | -20̸ | 39.40̸ | 42.0̸0̸ | 1.0̸7 | * | * |
| d = 2.0µm, L = 2.12µm, $\text{L·Δn = 0.337µm}$, λ = 0.38 to 0.78µm | | | | | | | |

**Table 37**

| No. | P | A | I+ | I- | CR | T | R |
|---|---|---|---|---|---|---|---|
| 1 | 120̸ | -60̸ | 24.80̸ | 40̸.0̸0̸ | 1.61 | * | o |
| 2 | 140̸ | -40̸ | 25.20̸ | 40̸.60̸ | 1.61 | * | o |
| 3 | 160̸ | -20̸ | 26.50̸ | 42.10̸ | 1.59 | * | o |
| 4 | 90̸ | -90̸ | 26.70̸ | 42.0̸0̸ | 1.57 | * | o |
| 5 | 110̸ | 60̸ | 46.70̸ | 36.70̸ | 1.27 | * | * |
| 6 | 10̸0̸ | -10̸ | 7.30̸ | 0̸.30̸ | 24.33 | * | * |
| d = 4.0µm, L = 4.24µm, $\text{L·Δn = 0.593µm}$, λ = 0.38 to 0.78µm | | | | | | | |

**Table 38**

| No. | P | A | I+ | I- | CR | T | R |
|---|---|---|---|---|---|---|---|
| 1 | 90̸ | -10̸ | 28.90̸ | 1.60̸ | 18.0̸6 | o | o |
| 2 | 80̸ | 0̸ | 28.90̸ | 2.70̸ | 10̸.70̸ | o | o |
| 3 | 150̸ | -20̸ | 15.0̸0̸ | 35.90̸ | 2.39 | * | o |
| 4 | 90̸ | -45 | 18.50̸ | 8.90̸ | 2.0̸8 | * | o |
| 5 | 170̸ | 40̸ | 24.70̸ | 18.40̸ | 1.34 | * | o |
| 6 | 130̸ | 60̸ | 38.50̸ | 34.30̸ | 1.12 | * | * |
| 7 | 20̸ | -60̸ | 42.70̸ | 38.90̸ | 1.10̸ | * | * |
| 8 | 130̸ | -80̸ | 10̸.90̸ | 10̸.10̸ | 1.0̸8 | * | * |
| 9 | 60̸ | -60̸ | 36.70̸ | 38.10̸ | 1.0̸4 | * | * |
| d = 6.0µm, L = 6.35µm, $\text{L·Δn = 0.889µm}$, λ = 0.38 to 0.78µm | | | | | | | |

**Table 39**

| No. | P | A | I+ | I- | CR | T | R |
|---|---|---|---|---|---|---|---|
| 1 | 50̸ | -40̸ | 0̸.70̸ | 36.50̸ | 52.14 | o | o |
| 2 | 140̸ | 60̸ | 3.60̸ | 39.0̸0̸ | 10̸.83 | o | o |
| 3 | 150̸ | -50̸ | 44.60̸ | 12.0̸0̸ | 3.72 | * | * |
| 4 | 150̸ | -20̸ | 44.20̸ | 13.20̸ | 3.35 | * | o |
| 5 | 170̸ | 40̸ | 15.50̸ | 37.60̸ | 2.43 | * | o |
| 6 | 160̸ | -90̸ | 8.80̸ | 19.0̸0̸ | 2.16 | * | o |
| 7 | 110̸ | -30̸ | 23.60̸ | 12.90̸ | 1.83 | * | o |
| 8 | 60̸ | 0̸ | 16.0̸0̸ | 27.0̸0̸ | 1.69 | * | o |
| 9 | 20̸ | -10̸ | 39.40̸ | 45.60̸ | 1.16 | * | * |
| 10̸ | 10̸0̸ | -45 | 27.90̸ | 29.50̸ | 1.0̸6 | * | * |
| 11 | 130̸ | -80̸ | 39.50̸ | 38.20̸ | 1.0̸3 | * | * |
| d = 2.0µm, L = 1.89µm, $\text{L·Δn = 0.189µm}$, λ = 0.38 to 0.78µm | | | | | | | |

**Table 40**

| No. | P | A | I+ | I- | CR | T | R |
|---|---|---|---|---|---|---|---|
| 1 | 40̸ | -60̸ | 0̸.40̸ | 28.60̸ | 71.50̸ | o | o |
| 2 | 60̸ | -40̸ | 0̸.70̸ | 47.10̸ | 67.29 | o | o |
| 3 | 140̸ | -40̸ | 45.30̸ | 2.10̸ | 21.57 | o | o |
| 4 | 160̸ | -20̸ | 45.40̸ | 11.80̸ | 3.85 | * | o |
| 5 | 140̸ | 70̸ | 12.60̸ | 46.0̸0̸ | 3.65 | * | o |
| 6 | 90̸ | -60̸ | 27.90̸ | 44.70̸ | 1.60̸ | * | o |
| 7 | 110̸ | 60̸ | 28.20̸ | 35.80̸ | 1.27 | * | * |
| 8 | 90̸ | -90̸ | 45.90̸ | 40̸.60̸ | 1.13 | * | * |
| d = 2.8µm, L = 2.65µm, $\text{L·Δn = 0.265µm}$, λ = 0.38 to 0.78µm | | | | | | | |

**Table 41**

| No. | P | A | I+ | I- | CR | T | R |
|---|---|---|---|---|---|---|---|
| 1 | 40̸ | -60̸ | 0̸.80̸ | 29.10̸ | 36.38 | o | o |
| 2 | 160̸ | -60̸ | 37.0̸0̸ | 1.70̸ | 21.76 | o | o |
| 3 | 150̸ | -20̸ | 39.30̸ | 7.80̸ | 5.0̸4 | * | o |
| 4 | 170̸ | 40̸ | 10̸.40̸ | 46.10̸ | 4.43 | * | o |
| 5 | 90̸ | -45 | 13.70̸ | 40̸.10̸ | 2.93 | * | o |
| 6 | 130̸ | 60̸ | 14.90̸ | 43.10̸ | 2.89 | * | o |
| 7 | 130̸ | -80̸ | 43.20̸ | 32.60̸ | 1.33 | * | o |
| 8 | 90̸ | -80̸ | 40̸.20̸ | 44.50̸ | 1.11 | * | * |
| 9 | 10̸ | -70̸ | 7.30̸ | 3.80̸ | 1.92 | * | * |
| d = 2.0µm, L = 1.89µm, $\text{L·Δn = 0.301µm}$, λ = 0.38 to 0.78µm | | | | | | | |

**Table 42**

| No. | P | A | I+ | I- | CR | T | R |
|---|---|---|---|---|---|---|---|
| 1 | 170̸ | -80̸ | 30̸.50̸ | 0̸.30̸ | 10̸1.67 | o | o |
| 2 | 20̸ | 70̸ | 1.30̸ | 34.40̸ | 26.46 | o | o |
| 3 | 140̸ | 70̸ | 36.20̸ | 2.40̸ | 15.0̸8 | o | o |
| 4 | 40̸ | -30̸ | 36.20̸ | 2.40̸ | 15.0̸8 | o | o |
| 5 | 10̸0̸ | -30̸ | 3.20̸ | 35.10̸ | 10̸.97 | o | o |
| 6 | 160̸ | -70̸ | 39.90̸ | 5.60̸ | 7.13 | * | o |
| 7 | 110̸ | 60̸ | 44.20̸ | 7.20̸ | 6.14 | * | o |
| 8 | 10̸0̸ | -10̸ | 5.30̸ | 19.20̸ | 3.62 | * | o |
| 9 | 10̸0̸ | -60̸ | 17.40̸ | 47.50̸ | 2.73 | * | o |
| 10̸ | 140̸ | -40̸ | 25.30̸ | 40̸.10̸ | 1.58 | * | o |
| 11 | 90̸ | -90̸ | 31.10̸ | 42.10̸ | 1.35 | * | o |
| d = 4.0µm, L = 3.79µm, $\text{L·Δn = 0.531µm}$, λ = 0.38 to 0.78µm | | | | | | | |

**Table 43**

| No. | P | A | I+ | I- | CR | T | R |
|---|---|---|---|---|---|---|---|
| 1 | 10̸ | -70̸ | 31.20̸ | 1.60̸ | 19.50̸ | o | o |
| 2 | 10̸0̸ | 0̸ | 31.40̸ | 2.70̸ | 11.63 | o | o |
| 3 | 30̸ | -70̸ | 34.40̸ | 12.10̸ | 2.84 | * | o |
| 4 | 80̸ | -80̸ | 17.80̸ | 43.20̸ | 2.43 | * | o |
| 5 | 150̸ | -20̸ | 4.60̸ | 10̸.10̸ | 2.20̸ | * | o |
| 6 | 130̸ | -80̸ | 20̸.0̸0̸ | 34.50̸ | 1.73 | * | o |
| 7 | 90̸ | -45 | 28.40̸ | 39.50̸ | 1.39 | * | o |
| 8 | 170̸ | 40̸ | 33.0̸0̸ | 45.10̸ | 1.37 | * | o |
| 9 | 60̸ | -40̸ | 44.70̸ | 44.20̸ | 1.0̸1 | * | * |
| 10̸ | 130̸ | 60̸ | 41.50̸ | 41.60̸ | 1.0̸0̸ | * | * |
| d = 6.0µm, L = 5.68µm, $\text{L·Δn = 0.796µm}$, λ = 0.38 to 0.78µm | | | | | | | |

**Table 44**

| No. | P | A | I+ | I- | CR | T | R |
|---|---|---|---|---|---|---|---|
| 1 | 10̸0̸ | 0̸ | 1.30̸ | 15.90̸ | 12.23 | o | o |
| 2 | 90̸ | -10̸ | 1.30̸ | 15.90̸ | 12.23 | o | o |
| 3 | 10̸ | -70̸ | 3.80̸ | 21.70̸ | 5.71 | * | o |
| 4 | 140̸ | 60̸ | 3.20̸ | 12.80̸ | 4.0̸0̸ | * | o |
| 5 | 160̸ | -90̸ | 9.20̸ | 29.40̸ | 3.20̸ | * | o |
| 6 | 170̸ | 40̸ | 15.60̸ | 5.80̸ | 2.69 | * | o |
| 7 | 60̸ | 0̸ | 16.0̸0̸ | 32.90̸ | 2.0̸6 | * | o |
| 8 | 10̸0̸ | -45 | 28.30̸ | 18.0̸0̸ | 1.57 | * | o |
| 9 | 150̸ | -20̸ | 44.40̸ | 31.0̸0̸ | 1.43 | * | o |
| 10̸ | 110̸ | -30̸ | 24.50̸ | 19.80̸ | 1.24 | * | * |
| 11 | 130̸ | -80̸ | 39.10̸ | 41.80̸ | 1.0̸7 | * | * |
| 12 | 140̸ | -60̸ | 44.70̸ | 47.30̸ | 1.0̸6 | * | * |
| 13 | 20̸ | -20̸ | 31.35 | 31.40̸ | 1.0̸0̸ | * | * |
| 14 | 30̸ | -70̸ | 0̸.80̸ | 8.20̸ | 10̸.25 | * | o |
| d = 2.0µm, L = 1.60µm, $\text{L·Δn = 0.160µm}$, λ = 0.38 to 0.78µm | | | | | | | |

**Table 45**

| No. | P | A | I+ | I- | CR | T | R |
|---|---|---|---|---|---|---|---|
| 1 | 40̸ | -60̸ | 0̸.20̸ | 14.0̸0̸ | 70̸.0̸0̸ | o | o |
| 2 | 60̸ | -40̸ | 0̸.20̸ | 14.0̸0̸ | 70̸.0̸0̸ | o | o |
| 3 | 10̸ | -90̸ | 1.70̸ | 26.40̸ | 15.53 | o | o |
| 4 | 90̸ | 0̸ | 3.10̸ | 32.40̸ | 10̸.45 | o | o |
| 5 | 10̸0̸ | -10̸ | 3.30̸ | 21.80̸ | 6.61 | * | o |
| 6 | 70̸ | -10̸ | 6.50̸ | 34.20̸ | 5.26 | * | o |
| 7 | 40̸ | -40̸ | 5.20̸ | 23.30̸ | 4.48 | * | o |
| 8 | 170̸ | -80̸ | 13.0̸0̸ | 42.60̸ | 3.28 | * | o |
| 9 | 90̸ | -90̸ | 44.40̸ | 15.10̸ | 2.94 | * | o |
| 10̸ | 140̸ | 70̸ | 11.60̸ | 31.60̸ | 2.72 | * | o |
| 11 | 140̸ | -40̸ | 46.30̸ | 29.40̸ | 1.57 | * | o |
| 12 | 160̸ | -60̸ | 35.80̸ | 46.50̸ | 1.30̸ | * | * |
| 13 | 110̸ | 60̸ | 26.60̸ | 33.0̸0̸ | 1.24 | * | * |
| 14 | 20̸ | 70̸ | 13.30̸ | 15.40̸ | 1.16 | * | * |
| d = 2.8µm, L = 2.24µm, $\text{L·Δn = 0.224µm}$, λ = 0.38 to 0.78µm | | | | | | | |

**Table 46**

| No. | P | A | I+ | I- | CR | T | R |
|---|---|---|---|---|---|---|---|
| 1 | 10̸ | -90̸ | 2.20̸ | 31.40̸ | 14.27 | o | o |
| 2 | 10̸0̸ | 0̸ | 2.30̸ | 31.40̸ | 13.65 | o | o |
| 3 | 10̸0̸ | -10̸ | 3.0̸0̸ | 25.80̸ | 8.60̸ | * | o |
| 4 | 80̸ | 0̸ | 8.80̸ | 41.90̸ | 4.76 | * | o |
| 5 | 20̸ | -60̸ | 7.50̸ | 35.10̸ | 4.68 | * | o |
| 6 | 150̸ | -20̸ | 39.90̸ | 12.50̸ | 3.19 | * | o |
| 7 | 110̸ | -10̸ | 6.30̸ | 20̸.0̸0̸ | 3.17 | * | o |
| 8 | 130̸ | 60̸ | 13.10̸ | 33.70̸ | 2.57 | * | o |
| 9 | 120̸ | -60̸ | 44.80̸ | 19.40̸ | 2.31 | * | o |
| 10̸ | 90̸ | -45 | 14.20̸ | 8.30̸ | 1.71 | * | o |
| 11 | 170̸ | 40̸ | 10̸.20̸ | 6.80̸ | 1.50̸ | * | o |
| 12 | 130̸ | -80̸ | 42.40̸ | 34.60̸ | 1.23 | * | * |
| 13 | 160̸ | -60̸ | 37.70̸ | 43.60̸ | 1.16 | * | * |
| 14 | 20̸ | -20̸ | 35.60̸ | 31.50̸ | 1.13 | * | * |
| d = 2.0µm, L = 1.60µm, $\text{L·Δn = 0.254µm}$, λ = 0.38 to 0.78µm | | | | | | | |

**Table 47**

| No. | P | A | I+ | I- | CR | T | R |
|---|---|---|---|---|---|---|---|
| 1 | 90̸ | -90̸ | 27.30̸ | 1.40̸ | 19.50̸ | o | o |
| 2 | 10̸0̸ | -80̸ | 27.90̸ | 2.20̸ | 12.68 | o | o |
| 3 | 20̸ | 70̸ | 4.80̸ | 36.90̸ | 7.69 | * | o |
| 4 | 160̸ | -20̸ | 29.20̸ | 4.20̸ | 6.95 | * | o |
| 5 | 10̸0̸ | -10̸ | 8.50̸ | 46.0̸0̸ | 5.41 | * | o |
| 6 | 120̸ | -60̸ | 30̸.60̸ | 6.40̸ | 4.78 | * | o |
| 7 | 60̸ | -40̸ | 10̸.0̸0̸ | 41.60̸ | 4.16 | * | o |
| 8 | 40̸ | -60̸ | 10̸.0̸0̸ | 41.50̸ | 4.15 | * | o |
| 9 | 140̸ | -40̸ | 31.60̸ | 7.80̸ | 4.0̸5 | * | o |
| 10̸ | 110̸ | 60̸ | 41.30̸ | 17.70̸ | 2.33 | * | o |
| 11 | 90̸ | 0̸ | 20̸.60̸ | 46.40̸ | 2.25 | * | o |
| 12 | 70̸ | -10̸ | 26.90̸ | 41.40̸ | 1.54 | * | o |
| 13 | 170̸ | -80̸ | 35.0̸0̸ | 37.50̸ | 1.0̸7 | * | * |
| 14 | 140̸ | 70̸ | 31.80̸ | 32.60̸ | 1.0̸3 | * | * |
| d = 4.0µm, L = 3.20µm, $\text{L·Δn = 0.448µm}$, λ = 0.38 to 0.78µm | | | | | | | |

**Table 48**

| No. | P | A | I+ | I- | CR | T | R |
|---|---|---|---|---|---|---|---|
| 1 | 150̸ | -20̸ | 1.90̸ | 24.70̸ | 13.0̸0̸ | o | o |
| 2 | 130̸ | 60̸ | 44.20̸ | 10̸.0̸0̸ | 4.42 | * | o |
| 3 | 160̸ | -30̸ | 8.20̸ | 26.60̸ | 3.24 | * | o |
| 4 | 20̸ | -60̸ | 45.30̸ | 23.30̸ | 1.94 | * | o |
| 5 | 60̸ | -20̸ | 45.30̸ | 23.40̸ | 1.94 | * | o |
| 6 | 110̸ | -10̸ | 26.10̸ | 39.70̸ | 1.52 | * | o |
| 7 | 90̸ | -45 | 14.40̸ | 21.30̸ | 1.48 | * | o |
| 8 | 160̸ | -60̸ | 29.70̸ | 43.50̸ | 1.46 | * | o |
| 9 | 170̸ | 40̸ | 17.80̸ | 12.40̸ | 1.44 | * | o |
| 10̸ | 130̸ | -80̸ | 21.80̸ | 28.70̸ | 1.32 | * | * |
| 11 | 10̸0̸ | 0̸ | 39.60̸ | 41.80̸ | 1.0̸6 | * | * |
| 12 | 80̸ | 0̸ | 45.90̸ | 43.70̸ | 1.0̸5 | * | * |
| 13 | 10̸ | -90̸ | 39.60̸ | 41.50̸ | 1.0̸5 | * | * |
| 14 | 90̸ | -80̸ | 1.30̸ | 4.40̸ | 3.38 | * | * |
| d = 6.0µm, L = 4.80µm, $\text{L·Δn = 0.672µm}$, λ = 0.38 to 0.78µm | | | | | | | |

**Table 49**

| No. | P | A | I+ | I- | CR | T | R |
|---|---|---|---|---|---|---|---|
| 1 | 40̸ | -60̸ | 0̸.90̸ | 42.50̸ | 47.22 | o | o |
| 2 | 60̸ | -40̸ | 0̸.40̸ | 18.20̸ | 45.50̸ | o | o |
| 3 | 10̸0̸ | -10̸ | 0̸.90̸ | 24.80̸ | 27.56 | o | o |
| 4 | 110̸ | -70̸ | 44.10̸ | 3.0̸0̸ | 14.70̸ | o | o |
| 5 | 90̸ | 0̸ | 2.90̸ | 23.60̸ | 8.14 | * | o |
| 6 | 20̸ | 70̸ | 9.50̸ | 24.10̸ | 2.54 | * | o |
| 7 | 140̸ | -40̸ | 44.60̸ | 24.10̸ | 1.85 | * | o |
| 8 | 90̸ | -90̸ | 44.40̸ | 24.40̸ | 1.82 | * | o |
| 9 | 140̸ | 70̸ | 14.50̸ | 9.70̸ | 1.49 | * | o |
| 10̸ | 170̸ | -80̸ | 14.70̸ | 20̸.90̸ | 1.42 | * | o |
| 11 | 120̸ | -30̸ | 24.80̸ | 21.60̸ | 1.15 | * | * |
| 12 | 110̸ | 60̸ | 30̸.80̸ | 31.20̸ | 1.0̸1 | * | * |
| 13 | 80̸ | -20̸ | 0̸.30̸ | 9.80̸ | 32.67 | o | o |
| 14 | 70̸ | -10̸ | 7.60̸ | 7.80̸ | 1.0̸3 | * | * |
| d = 2.8µm, L = 3.15µm, $\text{L·Δn = 0.315µm}$, λ = 0.38 to 0.78µm | | | | | | | |

**Table 50**

| No. | P | A | I+ | I- | CR | T | R |
|---|---|---|---|---|---|---|---|
| 1 | 40̸ | -60̸ | 0̸.40̸ | 16.50̸ | 41.25 | o | o |
| 2 | 60̸ | -40̸ | 1.20̸ | 40̸.80̸ | 34.0̸0̸ | o | o |
| 3 | 90̸ | 0̸ | 1.90̸ | 23.90̸ | 12.58 | o | o |
| 4 | 10̸0̸ | -10̸ | 2.0̸0̸ | 21.50̸ | 10̸.75 | o | o |
| 5 | 70̸ | -10̸ | 6.50̸ | 42.50̸ | 6.54 | * | o |
| 6 | 140̸ | -40̸ | 45.20̸ | 11.20̸ | 4.0̸4 | * | o |
| 7 | 140̸ | 70̸ | 12.70̸ | 46.20̸ | 3.64 | * | o |
| 8 | 70̸ | -60̸ | 12.70̸ | 31.70̸ | 2.50̸ | * | o |
| 9 | 170̸ | -80̸ | 12.0̸0̸ | 24.80̸ | 2.0̸7 | * | o |
| 10̸ | 150̸ | -60̸ | 41.20̸ | 21.30̸ | 1.93 | * | o |
| 11 | 90̸ | -90̸ | 45.70̸ | 24.20̸ | 1.89 | * | o |
| 12 | 120̸ | -40̸ | 35.60̸ | 23.30̸ | 1.53 | * | o |
| 13 | 20̸ | 70̸ | 12.20̸ | 18.50̸ | 1.52 | * | o |
| 14 | 110̸ | 60̸ | 27.50̸ | 23.80̸ | 1.16 | * | * |
| d = 2.8µm, L = 2.52µm, $\text{L·Δn = 0.252µm}$, λ = 0.38 to 0.78µm | | | | | | | |

## Claims

1. A liquid crystal electrooptical element comprising:
a pair of substrates (5),
electrodes (4) and alignment films (2) disposed on the respective opposing inside surfaces of said substrates (5), and
a chiral nematic liquid crystal (21) sandwiched between said pair of substrates (5), wherein pixels are defined by said electrodes and non-pixel areas exist between adjacent pixels, and wherein
the helical pitch of said liquid crystal is adjusted such that the twist angle in the initial state before applying a voltage is roughly equal to the angle Φr which is formed by respective orientation directions on the alignment films (2),
the pretilt angles formed in said initial state by the director vector of the liquid crystal molecules in contact with each alignment film (2) and the substrate surfaces have mutually opposing signs,
said liquid crystal (21) relaxes to one of two states after applying a pulse voltage to said initial state, the twist angles in the states being roughly (Φr + 180°) and roughly (Φr-180°), respectively,
one of said states is an ON display state and the other of states is an OFF display state, the display state being controlled between said two states, the states selected in a selection period being maintained in a nonselection period, and
**characterized in that**
said pair of substrates is positioned between a pair of polarizing plates (7),
the alignment films have undergone rubbing, said orientation directions being the rubbing directions,
said two states of said liquid crystal (21) are metastable states,
the respective angles P, A formed by the polarization axis of each polarizing plate (7) and one of the rubbing directions are both set according to the product $\text{R (R = dΔn}$) of the thickness d (µm) and the birefringence index Δn of the liquid crystal layer and the angle Φr so that the contrast ratio between said metastable states is 2 or greater,
the product R satisfies 0.1 ≤ R ≤ 1.06, and
the ratio of the thickness (do) of said liquid crystal layer in said non-pixel areas to the helical pitch (po) is greater than the ratio of the thickness (d) of said liquid crystal layer in said pixels to the helical pitch (po), such that the light transmittance of the non-pixel areas is lower than the light transmittance of pixels.

2. The element of claim 1 wherein the contrast ratio is 2 or greater in a reflective type element.

3. The element of claim 1 wherein the contrast ratio is 10 or greater in a transmission type element.

4. The element of claim 1 wherein 90° ≤ Φr ≤ 270°.

5. The element of claim 1 wherein 160° ≤ Φr ≤ 200°.

6. The element of claim 1 wherein Φr is roughly 180°.

7. The element of claim 5 wherein the absolute value of the pretilt angle of the director of the liquid crystal molecules in contact with the liquid crystal alignment films is greater than or equal to 1° and less than or equal to 25°.

8. The element of claim 5 wherein the product R and the angles P, A satisfy the following relationships:
(1) When 0.102 ≤ R ≤ 0.4 or 0.78 ≤ R ≤ 0.96,$\begin{matrix}\begin{matrix}\text{[P + α1 ≤ A ≤ P + α2 and -P + β1 ≤ A ≤ -P + β2] or} \\ \text{[P + γ1 ≤ A ≤ P + γ2 and -P + δ1 ≤ A ≤ -P + δ2]}\end{matrix}\end{matrix}$
(2) When 0.72 ≤ R ≤ 0.78,$\begin{matrix}\begin{matrix}\text{[P + α1 ≤ A ≤ P + α2 and -P + β1 ≤ A ≤ -P + β2] or} \\ \text{[P + γ1 ≤ A ≤ P + γ2]}\end{matrix}\end{matrix}$
(3) When 0.40 ≤ R ≤ 0.72, 0.96 ≤ R ≤ 0.99,$\begin{matrix}\begin{matrix}\text{[P + α1 ≤ A ≤ P + α2] or} \\ \text{[P + γ1 ≤ A ≤ P + γ2]}\end{matrix}\end{matrix}$
(4) When 0.99 ≤ R ≤ 1.02,$\text{[P + α1 ≤ A ≤ P + α2]}$
(5) When 1.02 ≤ R ≤ 1.05,$\text{[P + γ1 ≤ A ≤ P + γ2]}$
Provided:
| | | |
|---|---|---|
| α1 = | -109.4·R - 133.1 | (0.102 ≤ R ≤ 1.02) |
| | -225.0 | (1.05 ≤ R ≤ 1.06) |
| α2 = | -45.0, | (0.102 ≤ R ≤ 0.32) |
| | 6696.4·R³ - 8720.1·R² + 3354.7·R - 445.0 | (0.32 ≤ R ≤ 0.64) |
| | 1519.0·R³ - 4175.2·R² + 3568.7·R - 1087.0 | (0.64 ≤ R ≤ 1.02) |
| | -333.3·R + 175.0, | (1.05 ≤ R ≤ 1.06) |
| β1 = | -9114.6·R³ + 6666.7·R² - 1577.1·R + 74.0 | (0.102 ≤ R ≤ 0.36) |
| | -55.0 | (0.36 ≤ R ≤ 0.40) |
| | -75.0 | (0.72 ≤ R ≤ 0.96) |
| β2 = | 9114.6·R³-6666.7·R² + 1577.1·R-74.0 | (0.102 ≤ R ≤ 0.36) |
| | 55.0 | (0.36 ≤ R ≤ 0.40) |
| | 75.0 | (0.72 ≤ R ≤ 0.96) |
| γ1 = | 312.5·R² - 187.5·R - 37.0 | (0.102 ≤ R ≤ 0.32) |
| | 5208.3·R³ - 7500.0·R² + 3341.6·R - 537.0 | (0.32 ≤ R ≤ 0.64) |
| | 1030.2·R³ - 2722.0·R² + 2225.9·R - 684.0 | (0.64 ≤ R ≤ 0.99) |
| | 197575.9·R³ - 626821.6·R² + 662332.3·R - 233217.9 | (1.02 ≤ R ≤ 1.06) |
| γ2 = | -625.0·R² + 225.0·R + 27.0 | (0.102 ≤ R ≤ 0.32) |
| | 7254.4·R³ - 10245.5·R² + 4448.2·R - 577.0 | (0.32 ≤ R ≤ 0.64) |
| | -558.0·R² + 736.6·R - 267.9 | (0.64 ≤ R ≤ 0.99) |
| | -5555.5·R² + 11500.0·R - 6024.9 | (1.02 ≤ R ≤ 1.06) |
| δ1 = | -6746.0·R³ + 5571.4·R² - 1504.0·R + 166.9 | (0.102 ≤ R ≤ 0.40) |
| | -55.6·R + 68.4 | (0.78 ≤ R ≤ 0.96) |
| δ2 = | 6746.0·R³ - 5571.4·R² + 1504.0·R + 13.1 | (0.102 ≤ R ≤ 0.40) |
| | 55.6·R + 111.6 | (0.78 ≤ R ≤ 0.96) |

9. The element of claim 1 wherein at least one of the two metastable states of the liquid crystal does not satisfy the condition $\text{|L| · Δn » λ}$, where, $\text{L = d·360°/(Φr + 180°)}$ or $\text{d·360°/(Φr - 180°)}$ and λ is the wavelength of the light, and the contrast ratio is 10 or greater.

10. The element of claim 9 wherein L·Δn is less than 1.88 µm.

11. The element of claim 9 wherein at least one of the two metastable states is optically isotropic.

12. The element of claim 9, 10 or 11 wherein 90° ≤ Φr ≤ 270°.

13. The element of claim 9, 10 or 11 wherein 160° ≤ Φr ≤ 200° and the product R and the angles P, A have the following relationship:
(1) When 0.1 ≤ R ≤ 0.22,$\text{A = P + α, where α = -82·R + α1}$
(2) When 0.22 < R ≤ 0.42,$\begin{matrix}\begin{matrix}\text{A = P + α, where α = -82·R + α1, or} \\ \text{A = -P + β1}\end{matrix}\end{matrix}$
(3) When 0.42 < R ≤ 0.44,$\begin{matrix}\begin{matrix}\text{A = P + α, where α = - 137.5·R + α2, or} \\ \text{A = - P + β1}\end{matrix}\end{matrix}$
(4) When 0.44 < R < 0.473,$\text{A = P + γ, where -137.5·R - 75 ≤ γ ≤ -60}$
(5) When 0.473 ≤ R ≤ 0.7,$\text{A = P + α, where α = -137.5·R + α2, or}$$\text{A = P + α3}$
(6) When 0.7 < R ≤ 1.06,$\text{A = -P + β1}$
However,$\begin{matrix}\begin{matrix}\text{-99° ≤ α1 ≤ -58° -75° ≤ α2 ≤ -35°} \\ \text{-100° ≤ α3 ≤ -60° 70° ≤ β1 ≤ 110°}\end{matrix}\end{matrix}$

14. The element of claim 9, 10 or 11 wherein Φr is roughly 180° and the product R and the angles P, A have the following relationship:
(1) When 0.1 ≤ R ≤ 0.22,$\text{A = P + α, where α = -82·R + α1}$
(2) When 0.22 < R ≤ 0.42,$\begin{matrix}\begin{matrix}\text{A = P + α, where α = -82·R + α1, or} \\ \text{A = -P + β1}\end{matrix}\end{matrix}$
(3) When 0.42 < R ≤ 0.44,$\begin{matrix}\begin{matrix}\text{A = P + α, where α = - 137.5·R + α2, or} \\ \text{A = - P + β1}\end{matrix}\end{matrix}$
(4) When 0.44 < R ≤ 0.7,$\begin{matrix}\begin{matrix}\text{A = P + α, where α = -137.5·R + α2, or} \\ \text{A = P + α3}\end{matrix}\end{matrix}$
(5) When 0.7 < R ≤ 1.06,$\text{A = -P + β1}$
However,$\begin{matrix}\begin{matrix}\text{-94° ≤ α1 ≤ -63° -70° ≤ α2 ≤ -40°} \\ \text{-95° ≤ α3 ≤ -65° 75° ≤ β1 ≤ 105°}\end{matrix}\end{matrix}$

15. A liquid crystal display device wherein a matrix is disposed by forming each of the electrodes of the liquid crystal electrooptical element as defined in any one of the preceding claims into a scanning electrode group and a signal electrode group with said pixels being formed by the intersection of the scanning electrode group and the signal electrode group.

16. The device of claim 15 wherein the angles formed by a selected side of the pixels and each of the rubbing directions are greater than or equal to 10° and less than or equal to 80°, respectively.

17. The device of claim 15 or 16 wherein one or both of the angles formed by the rubbing directions and the vertical direction of the display panel comprising said pixels is equal to or greater than -45° and less than or equal to 45°.

18. The element of claim 1 wherein the ratio of the thickness (d) of said liquid crystal layer in said pixels to the helical pitch (po) is ${\text{0.5 Φr/360° ≤ d/p}}_{\text{o}} \text{≤ 1.5 Φr/360°}$.

## Patentansprüche

1. Elektrooptisches Flüssigkristallelement, umfassend:
ein Paar Substrate (5),
Elektroden (4) und Ausrichtungsfilme (2), die auf den jeweiligen, einander gegenüberliegenden Innenflächen der Substrate (5) angeordnet sind, und
einen chiralen nematischen Flüssigkristall (21), der zwischen dem Paar von Substraten (5) angeordnet ist, wobei Pixel durch die Elektroden definiert sind und Nichtpixelbereiche zwischen benachbarten Pixeln vorhanden sind, und wobei
die Helixsteigung des Flüssigkristalls so eingestellt ist, daß der Verdrillungswinkel im Anfangszustand vor dem Anlegen einer Spannung ungefähr gleich dem Winkel Φr ist, der durch jeweilige Orientierungsrichtungen auf den Ausrichtungsfilmen (2) gebildet ist,
die Prä-Anstellwinkel, die in dem Anfangszustand vom Direktorvektor der Flüssigkristallmoleküle in Kontakt mit dem jeweiligen Ausrichtungsfilm (2) und den Substratflächen gebildet sind, einander entgegengesetzte Vorzeichen aufweisen,
der Flüssigkristall (21) nach dem Anlegen einer Impulsspannung an den Anfangszustand in einen von zwei Zuständen relaxiert, wobei die Verdrillungswinkel in den Zuständen ungefähr (Φr + 180°) bzw. ungefähr (Φr - 180°) sind, und
einer der Zustände ein EIN-Anzeigezustand und der andere der Zustände ein AUS-Anzeigezustand ist, wobei der Anzeigezustand zwischen den zwei Zuständen gesteuert ist, wobei die in einer Auswahlperiode ausgewählten Zustände in einer Nichtauswahlperiode beibehalten werden,
**dadurch gekennzeichnet**, daß
das Paar Substrate zwischen einem Paar Polarisierungsplatten (7) positioniert ist,
die Ausrichtungsfilme einem Reiben unterzogen wurden, wobei die Orientierungsrichtungen die Reiberichtungen sind,
die zwei Zustände des Flüssigkristalls (21) metastabile Zustände sind,
die jeweiligen Winkel P, A, die durch die Polarisationsachse der jeweiligen Polarisationsplatte (7) und einer der Reiberichtungen gebildet sind, beide nach Maßgabe des Produkts R ($\text{R = dΔn}$) der Dicke d (µm) mit dem Doppelbrechungsindex Δn der Flüssigkristallschicht und dem Winkel Φr so eingestellt sind, daß das Kontrastverhältnis zwischen den metastabilen Zuständen 2 oder größer ist,
das Produkt R erfüllt 0,1 ≤ R ≤ 1,06, und
das Verhältnis der Dicke (dₒ) der Flüssigkristallschicht in den Nichtpixelbereichen zur Helixsteigung (pₒ) größer als das Verhältnis der Dicke (d) der Flüssigkristallschicht in den Pixeln zur Helixsteigung (pₒ) ist, so daß der Lichtdurchlaßgrad der Nichtpixelbereiche kleiner als der Lichtdurchlaßgrad von Pixeln ist.

2. Element nach Anspruch 1, bei dem das Kontrastverhältnis in einem Reflexionselement 2 oder größer ist.

3. Element nach Anspruch 1, bei dem das Kontrastverhältnis in einem Transmissionselement 10 oder größer ist.

4. Element nach Anspruch 1, bei dem 90° ≤ Φr ≤ 270°.

5. Element nach Anspruch 1, bei dem 160° ≤ Φr ≤ 200°.

6. Element nach Anspruch 1, bei dem Φr ungefähr 180° ist.

7. Element nach Anspruch 5, bei dem der Absolutwert des Prä-Anstellwinkels des Direktors der Flüssigkristallmoleküle in Kontakt mit den Flüssigkristallausrichtungsfilmen größer oder gleich 1° und kleiner oder gleich 25° ist.

8. Element nach Anspruch 5, bei dem das Produkt R und die Winkel P, A die folgenden Beziehungen erfüllen:
(1) Wenn 0,102 ≤ R ≤ 0,4 oder 0,785 ≤ R ≤ 0,96,$\begin{matrix}\begin{matrix}\text{[P + α1 ≤ A ≤ P + α2 und -P + β1 ≤ A ≤ -P + β2] oder} \\ \text{[P + γ1 ≤ A ≤ P + γ2 und -P + δ1 ≤ A ≤ -P + δ2]}\end{matrix}\end{matrix}$
(2) Wenn 0,72 ≤ R ≤ 0,78,$\begin{matrix}\begin{matrix}\text{[P + α1 ≤ A ≤ P + α2 und -P + β1 ≤ A ≤ -P + β2] oder} \\ \text{[P + γ1 ≤ A ≤ P + γ2]}\end{matrix}\end{matrix}$
(3) Wenn 0,40 ≤ R ≤ 0,72, 0,96 ≤ R ≤ 0,99,$\begin{matrix}\begin{matrix}\text{[P + α1 ≤ A ≤ P + α2] oder} \\ \text{[P + γ1 ≤ A ≤ P + γ2]}\end{matrix}\end{matrix}$
(4) Wenn 0,99 ≤ R ≤ 1,02,$\text{[P + α1 ≤ A ≤ P + α2]}$
(5) Wenn 1,02 ≤ R ≤ 1,05,$\text{[P + γ1 ≤ A ≤ P + γ2]}$
Mit:
| | | |
|---|---|---|
| α1 = | -109,4·R- 133,1 | (0,102 ≤ R ≤ 1,02) |
| | -225,0 | (1,05 ≤ R ≤ 1,06) |
| α2 = | -45,0, | (0,102 ≤ R ≤ 0,32) |
| | 6696,4·R³ - 8720,1·R² + 3354,7·R - 445,0 | (0,32 ≤ R ≤ 0,64) |
| | 1519,0·R³ - 4175,2·R² + 3568,7·R- 1087,0 | (0,64 ≤ R ≤ 1,02) |
| | -333,3·R + 175,0, | (1,05 ≤ R ≤ 1,06) |
| β1 = | -9114,6·R³ + 6666,7·R² - 1577,1·R + 74,0 | (0,102 ≤ R ≤ 0,36) |
| | -55,0 | (0,36 ≤ R ≤ 0,40) |
| | -75,0 | (0,72 ≤ R ≤ 0,96) |
| β2 = | 9114,6·R³ - 6666,7·R² + 1577,1·R - 74,0 | (0,102 ≤ R ≤ 0,36) |
| | 55,0 | (0,36 ≤ R ≤ 0,40) |
| | 75,0 | (0,72 ≤ R ≤ 0,96) |
| γ1 = | 312,5·R² - 187,5·R - 37,0 | (0,102 ≤ R ≤ 0,32) |
| | 5208,3·R³ - 7500,0·R² + 3341,6·R - 537,0 | (0,32 ≤ R ≤ 0,64) |
| | 1030,2·R³ - 2722,0·R² + 2225,9·R - 684,0 | (0,64 ≤ R ≤ 0,99) |
| | 197575,9·R³ - 626821,6·R² + 662332,3·R - 233217,9 | (1,02 ≤ R ≤ 1,06) |
| γ2 = | -625,0·R² + 225,0·R + 27,0 | (0,102 ≤ R ≤ 0,32) |
| | 7254,4·R³ - 10245,5·R² + 4448,2·R - 577,0 | (0,32 ≤ R ≤ 0,64) |
| | -558,0·R² + 736,6·R - 267,9 | (0,64 ≤ R ≤ 0,99) |
| | -5555,5·R² + 11500,0·R - 6024,9 | (1,02 ≤ R ≤ 1,06) |
| δ1 = | -6746,0·R³ + 5571,4·R²- 1504,0·R + 166,9 | (0,102 ≤ R ≤ 0,40) |
| | -55,6·R + 68,4 | (0,78 ≤ R ≤ 0,96) |
| δ2 = | 6746,0·R³ - 5571,4·R² + 1504,0·R + 13,1 | (0,102 ≤ R ≤ 0,40) |
| | 55,6·R + 111,6 | (0,78 ≤ R ≤ 0,96) |

9. Element nach Anspruch 1, bei dem zumindest einer der zwei metastabilen Zustände des Flüssigkristalls nicht die Bedingung $\text{|L| · Δn » λ}$ erfüllt, wobei $\text{L = d`360°/(Φr + 180°)}$ oder $\text{d`360°/(Φr - 180°)}$ und λ die Wellenlänge des Lichts ist, und das Kontrastverhältnis 10 oder mehr ist.

10. Element nach Anspruch 9, bei dem L·Δn kleiner als 1,88 µm ist.

11. Element nach Anspruch 9, bei dem zumindest einer der zwei metastabilen Zustände optisch isotrop ist.

12. Element nach Anspruch 9, 10 oder 11, bei dem 90° ≤ Φr ≤ 270°.

13. Element nach Anspruch 9, 10 oder 11, bei dem 160° ≤ Φr ≤ 200° und das Produkt R sowie die Winkel P, A die folgende Beziehung aufweisen:
(1) Wenn 0,1 ≤ R ≤ 0,22,$\text{A = P + α, wobei α = -82·R + α1}$
(2) Wenn 0,22 < R ≤ 0,42,$\begin{matrix}\begin{matrix}\text{A = P + α, wobei α = -82·R + α1, oder} \\ \text{A = -P + β1}\end{matrix}\end{matrix}$
(3) Wenn 0,42 < R ≤ 0,44,$\begin{matrix}\begin{matrix}\text{A = P + α, wobei α = - 137,5·R + α2, oder} \\ \text{A = - P + β1}\end{matrix}\end{matrix}$
(4) Wenn 0,44 < R < 0,473,$\text{A = P + γ, wobei -137,5·R - 75 ≤ γ ≤ -60}$
(5) Wenn 0,473 ≤ R ≤ 0,7,$\begin{matrix}\begin{matrix}\text{A = P + α, wobei α = -137,5·R + α2, oder} \\ \text{A = P + α3}\end{matrix}\end{matrix}$
(6) Wenn 0,7 < R ≤ 1,06,$\text{A = -P + β1}$
Jedoch$\begin{matrix}\begin{matrix}\text{-99° ≤ α1 ≤ -58° -75° ≤ α2 ≤ -35°} \\ \text{-100° ≤ α3 ≤ -60° 70° ≤ β1 ≤ 110°}\end{matrix}\end{matrix}$

14. Element nach Anspruch 9, 10 oder 11, bei dem Φr ungefähr 180° ist und das Produkt R sowie die Winkel P, A die folgende Beziehung aufweisen:
(1) Wenn 0,1 ≤ R ≤ 0,22,$\text{A = P + α, wobei α = -82·R + α1}$
(2) Wenn 0,22 < R ≤ 0,42,$\begin{matrix}\begin{matrix}\text{A = P + α, wobei α = -82·R + α1, oder} \\ \text{A = -P + β1}\end{matrix}\end{matrix}$
(3) Wenn 0,42 < R ≤ 0,44,$\begin{matrix}\begin{matrix}\text{A = P + α, wobei α = - 137,5·R + α2, oder} \\ \text{A = - P + β1}\end{matrix}\end{matrix}$
(4) Wenn 0,44 < R ≤ 0,7,$\begin{matrix}\begin{matrix}\text{A = P + α, wobei α = - 137,5·R + α2, oder} \\ \text{A = P + α3}\end{matrix}\end{matrix}$
(5) Wenn 0,7 < R ≤ 1,06,$\text{A = -P + β1}$
Jedoch$\begin{matrix}\begin{matrix}\text{-94° ≤ α1 ≤ -63° -70° ≤ α2 ≤ -40°} \\ \text{-95° ≤ α3 ≤ -65° 75° ≤ β1 ≤ 105°}\end{matrix}\end{matrix}$

15. Flüssigkristallanzeigevorrichtung, bei der eine Matrix ausgebildet ist durch Bilden der einzelnen Elektroden des elektrooptischen Flüssigkristallelements gemäß einem der vorhergehenden Ansprüche als eine Abtastelektrodengruppe und eine Signalelektrodengruppe, wobei die Pixel durch die Kreuzung der Abtastelektrodengruppe und der Signalelektrodengruppe gebildet sind.

16. Vorrichtung nach Anspruch 15, bei der die durch eine ausgewählte Seite der Pixel und die einzelnen Reiberichtungen gebildeten Winkel jeweils größer oder gleich 10° und kleiner oder gleich 80° sind.

17. Vorrichtung nach Anspruch 15 oder 16, bei der einer oder beide der durch die Reiberichtungen und die vertikale Richtung der die Pixel aufweisenden Anzeigetafel gebildeten Winkel größer oder gleich -45° und kleiner oder gleich 45° sind.

18. Element nach Anspruch 1, bei dem das Verhältnis der Dicke (d) der Flüssigkristallschicht in den Pixeln zur Helixsteigung ${\text{(p}}_{\text{o}} {\text{) 0,5 Φr/360° ≤ d/p}}_{\text{o}} \text{≤ 1,5 Φr/360°}$ ist.

## Revendications

1. Elément électro-optique à cristal liquide comprenant :
une paire de substrats (5),
des électrodes (4) et des pellicules d'alignement disposées sur les faces intérieures respectives opposées des substrats (5),
un cristal (21) liquide chiral nématique pris en sandwich entre la paire de substrats (5), des points images étant définis par les électrodes et des zones sans points images existant entre des points images adjacents, et
le pas hélicoïdal du cristal liquide est réglé de manière que l'angle de torsion à l'état initial avant application d'une tension soit grossièrement égal à l'angle Φr entre les directions respectives d'orientation sur les pellicules (2) d'alignement,
les angles de pré-inclinaison que font à l'état initial le vecteur directeur des molécules de cristal liquide en contact avec chaque pellicule (2) d'alignement, et les faces des substrats ayant des signes opposés mutuellement,
le cristal (21) liquide revenant à l'un de deux états après application d'une tension par impulsion à l'état initial, les angles de torsion des états étant grossièrement de (Φr + 180°) et grossièrement (Φr - 180°) respectivement,
l'un de ces états est un état d'affichage ouvert et l'autre de ces états est un état d'affichage fermé, l'état d'affichage étant commandé entre ces deux états, les états sélectionnés pendant une durée de sélection étant maintenus pendant une durée de non sélection, et
caractérisé en ce que
la paire de substrats est placée entre une paire de plaques (7) de polarisation,
les pellicules d'alignement on subi un frottement, les directions d'orientation étant les directions de frottement,
les deux états du cristal (21) liquide sont des états métastables,
les angles P, A respectifs que font l'axe de polarisation de chaque plaque (7) de polarisation et l'une des directions de frottement sont tous deux fixés en fonction du produit $\text{R (R = dΔn)}$ de l'épaisseur d (µm) et de l'indice Δn de biréfringence de la couche de cristal liquide et de l'angle Φr de sorte que le rapport de contraste entre les états métastables soit de 2 ou supérieur à 2,
le produit R satisfait à 0,1 ≤ R ≤ 1,06 et
le rapport de l'épaisseur (do) de la couche de cristal liquide dans les régions où il n'y a pas de point image au pas (po) hélicoïdal est supérieur au rapport de l'épaisseur (d) de la couche de cristal liquide dans les points images au pas (po) hélicoïdal, de sorte que le facteur de transmission de la lumière des régions où il n'y a pas de point image est inférieur au facteur de transmission de la lumière des points images.

2. Elément suivant la revendication 1 dans lequel le rapport de contraste est de 2 ou est supérieur à 2 dans un élément de type à réflexion.

3. Elément suivant la revendication 1 dans lequel le rapport de contraste est de 10 ou est supérieur à 10 dans un élément de type à transmission.

4. Elément suivant la revendication 1 dans lequel 90° ≤ Φr ≤ 270°.

5. Elément suivant la revendication 1 dans lequel 160° ≤ Φr ≤ 200°.

6. Elément suivant la revendication 1 dans lequel Φr est grossièrement égal à 180°.

7. Elément suivant la revendication 5 dans lequel la valeur absolue de l'angle de pré-inclinaison du vecteur directeur des molécules de cristal liquide en contact avec les pellicules d'alignement de cristal liquide est supérieure ou égale à 1° et inférieure ou égale à 25°.

8. Elément suivant la revendication 5 dans lequel le produit R et les angles P, A satisfont aux relations suivantes :
(1) lorsque 0,102 ≤ R ≤ 0,4 ou 0,78 ≤ R ≤ 0,96,$\begin{matrix}\begin{matrix}\text{[P + α1 ≤ A ≤ P + α2 et -P + β1 ≤ A ≤ -P + β2] ou} \\ \text{[P + γ1 ≤ A ≤ P + γ2 et -P + δ1 ≤ A ≤ -P + δ2]}\end{matrix}\end{matrix}$
(2) lorsque 0,72 ≤ R ≤ 0,78$\begin{matrix}\begin{matrix}\text{[P + α1 ≤ A ≤ P + α2 et -P + β1 ≤ A ≤ -P + β2] ou} \\ \text{[P + γ1 ≤ A ≤ P + γ2]}\end{matrix}\end{matrix}$
(3) lorsque 0,40 ≤ R ≤ 0,72, 0,96 ≤ R ≤ 0,99,$\begin{matrix}\begin{matrix}\text{[P + α1 ≤ A ≤ P + α2] ou} \\ \text{[P + γ1 ≤ A ≤ P + γ2]}\end{matrix}\end{matrix}$
(4) lorsque 0,99 ≤ R ≤ 1,02,$\text{[P + α1 ≤ A ≤ P + α2]}$
(5) lorsque 1,02 ≤ R ≤ 1, 05,$\text{[P + γ1 ≤ A ≤ P + γ2]}$
pourvu que :
| | | |
|---|---|---|
| α1 = | -109,4·R - 133,1 | (0,102 ≤ R ≤ 1,02) |
| | -225,0 | (1,05 ≤ R ≤ 1,06) |
| α2 = | -45,0, | (0,102 ≤ R ≤ 0,32) |
| | 6696,4·R³ - 8720,1·R² + 3354,7·R - 445,0 | (0,32 ≤ R ≤ 0,64) |
| | 1519,0·R³ - 4175,2·R² + 3568,7·R - 1087,0 | (0,64 ≤ R ≤ 1,02) |
| | -333,3·R + 175,0, | (1,05 ≤ R ≤ 1,06) |
| β1 = | -9114,6·R³ + 6666,7·R² - 1577,1·R + 74,0 | (0,102 ≤ R ≤ 0,36) |
| | -55,0 | (0,36 ≤ R ≤ 0,40) |
| | -75,0 | (0,72 ≤ R ≤ 0,96) |
| β2 = | 9114,6·R³ - 6666,7·R² + 1577,1·R - 74,0 | (0,102 ≤ R ≤ 0,36) |
| | 55,0 | (0,36 ≤ R ≤ 0,40) |
| | 75,0 | (0,72 ≤ R ≤ 0,96) |
| γ1 = | 312,5·R² - 187,5·R - 37,0 | (0,102 ≤ R ≤ 0,32) |
| | 5208,3·R³ - 7500,0·R² + 3341,6·R - 537,0 | (0,32 ≤ R ≤ 0,64) |
| | 1030,2·R³ - 2722,0·R² + 2225,9·R - 684,0 | (0,64 ≤ R ≤ 0,99) |
| | 197575,9·R³ - 626821,6·R² + 662332,3·R -233217,9 | (1,02 ≤ R ≤ 1,06) |
| γ2 = | -625,0·R² + 225,0·R + 27,0 | (0,102 ≤ R ≤ 0,32) |
| | 7254,4·R³ - 10245,5·R² + 4448,2·R - 577,0 | (0,32 ≤ R ≤ 0,64) |
| | -558,0·R² + 736,6·R - 267,9 | (0,64 ≤ R ≤ 0,99) |
| | -5555,5·R² + 11500,0·R - 6024,9 | (1,02 ≤ R ≤ 1,06) |
| δ1 = | -6746,0·R³ + 5571,4·R² - 1504,0·R + 166,9 | (0,102 ≤ R ≤ 0,40) |
| | -55,6·R + 68,4 | (0,78 ≤ R ≤ 0,96) |
| δ2 = | 6746,0·R³ - 5571,4·R² + 1504,0·R + 13,1 | (0,102 ≤ R ≤ 0,40) |
| | 55,6·R + 111,6 | (0,78 ≤ R ≤ 0,96) |

9. Elément suivant la revendication 1 dans lequel l'un au moins des deux états métastableaus du cristal liquide ne satisfait pas à la condition $\text{|L| ·Δn » λ}$, dans laquelle $\text{L = d·360°/(Φr + 180°)}$ ou $\text{d·360°/(Φr - 180°)}$ et λ est la longueur d'onde de la lumière, et le rapport de contraste est de 10 ou est supérieur à 10.

10. Elément suivant la revendication 9 dans lequel L·Δn est inférieur à 1,88 µm.

11. Elément suivant la revendication 9 dans lequel l'un au moins des deux états métastables est isotrope du point de vue optique.

12. Elément suivant la revendication 9, 10 ou 11 dans lequel 90° ≤ Φr ≤ 270°.

13. Elément suivant la revendication 9, 10 ou 11 dans lequel 160° ≤ Φr ≤ 200°, et le produit R et les angles P, A ont la relation suivante :
(1) lorsque 0,1 ≤ R ≤ 0,22,$\text{A = P + α, dans laquelle α = -82·R + α1}$
(2) lorsque 0,22 < R ≤ 0,42,$\begin{matrix}\begin{matrix}\text{A = P + α, dans laquelle α =-82·R + α1, ou} \\ \text{A = -P + β1}\end{matrix}\end{matrix}$
(3) lorsque 0,42 < R ≤ 0,44,$\begin{matrix}\begin{matrix}\text{A = P + α, dans laquelle α = -137,5·R + α2, ou} \\ \text{A = -P + β1}\end{matrix}\end{matrix}$
(4) lorsque 0,44 < R < 0,473,$\text{A = P + γ, dans laquelle -137,5·R - 75 ≤ γ ≤ -60}$
(5) lorsque 0,473 ≤ R ≤ 0,7,$\begin{matrix}\begin{matrix}\text{A = P + α, dans laquelle α = -137,5·R + α2, ou} \\ \text{A = -P + α3}\end{matrix}\end{matrix}$
(6) lorsque 0,7 < R ≤ 1,06,$\text{A = -P + β1}$
mais,$\begin{matrix}\begin{matrix}\text{-99° ≤ α1 ≤ -58° -75°≤ α2 ≤ -35°} \\ \text{-100° ≤ α3 ≤ -60° 70° ≤ β1 ≤ 110°}\end{matrix}\end{matrix}$

14. Elément suivant la revendication 9, 10 ou 11 dans lequel Φr est grossièrement égal à 180°, et le produit R et les angles P, A ont la relation suivante :
(1) lorsque 0,1 ≤ R ≤ 0,22,$\text{A = P + α, dans laquelle α = -82·R + α1}$
(2) lorsque 0,22 < R ≤ 0,42,$\begin{matrix}\begin{matrix}\text{A = P + α, dans laquelle α = -82·R + α1, ou} \\ \text{A = -P + β1}\end{matrix}\end{matrix}$
(3) lorsque 0,42 < R ≤ 0,44,$\begin{matrix}\begin{matrix}\text{A = P + α, dans laquelle α = -137,5·R + α2, ou} \\ \text{A = -P + β1}\end{matrix}\end{matrix}$
(4) lorsque 0,44 < R ≤ 0,7,$\begin{matrix}\begin{matrix}\text{A = P + α, dans laquelle α = -137,5·R + α2, ou} \\ \text{A = P + α3}\end{matrix}\end{matrix}$
(5) lorsque 0,7 < R ≤ 1,06,$\text{A = -P + β1}$
mais,$\begin{matrix}\begin{matrix}\text{-94° ≤ α1 ≤ -63° -70° ≤ α2 ≤ -40°} \\ \text{-95° ≤ α3 ≤ -65° 75° ≤ β1 ≤ 105°}\end{matrix}\end{matrix}$

15. Dispositif d'affichage à cristal liquide dans lequel on ménage une matrice en conformant chacune des électrodes de l'élément électro-optique à cristal liquide tel que défini à l'une quelconque des revendications précédentes en un groupe d'électrodes de balayage et en un groupe d'électrodes de signal, les points images étant formés par l'intersection du groupe d'électrodes de balayage et du groupe d'électrodes de signal.

16. Dispositif suivant la revendication 15 dans lequel les angles faits par un côté sélectionné des points images et chacune des directions de frottement est supérieure ou égale à 10° et inférieure ou égale à 80°, respectivement.

17. Dispositif suivant la revendication 15 ou 16 dans lequel l'un des angles ou les deux angles faits par les directions de frottement avec la direction verticale du panneau d'affichage comprenant les points images sont égaux ou supérieurs à -45° et inférieurs ou égaux à 45°.

18. Elément suivant la revendication 1 dans lequel le rapport de l'épaisseur (d) de la couche de cristal liquide dans les points images au pas (po) hélicoïdal est ${\text{0,5 Φr/360° ≤ d/p}}_{\text{o}} \text{≤ 1,5 Φr/360°}$.
